(19) Europäisches Patentamt
European Patent Office
Office européen des brevets

(11) EP 4 633 098 A1

(12) EUROPEAN PATENT APPLICATION
published in accordance with Art. 153(4) EPC

(43) Date of publication:
15.10.2025 Bulletin 2025/42

(51) International Patent Classification (IPC):
H04L 27/26 (2006.01)    H04L 1/18 (2023.01)
H04L 5/00 (2006.01)

(21) Application number: 23916403.1

(22) Date of filing: 23.11.2023

(52) Cooperative Patent Classification (CPC):
H04L 1/18; H04L 5/00; H04L 27/26

(86) International application number:
PCT/KR2023/019043

(87) International publication number:
WO 2024/150920 (18.07.2024 Gazette 2024/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 10.01.2023 KR 20230003714
17.02.2023 KR 20230021740

(71) Applicant: Samsung Electronics Co., Ltd.
Suwon-si, Gyeonggi-do 16677 (KR)

(72) Inventors:
• KIM, Yeongsam
Suwon-si Gyeonggi-do 16677 (KR)
• CHOI, Youngkwan
Suwon-si Gyeonggi-do 16677 (KR)
• KIM, Kyeongyeon
Suwon-si Gyeonggi-do 16677 (KR)
• JANG, Min
Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) **ELECTRONIC DEVICE AND METHOD FOR RECEIVING SIGNALS IN WIRELESS COMMUNICATION SYSTEM**

(57)    A method performed by a distributed unit (DU) may comprise an operation for acquiring a plurality of reference signals and uplink data from a radio unit (RU) in a time interval. The method may comprise an operation for identifying a first frequency offset on the basis of phase information about the plurality of reference signals. The method may comprise an operation for performing initial decoding of the uplink data on the basis of the first frequency offset. The method may comprise an operation for identifying a second frequency offset on the basis of the first frequency offset and a reference value in response to a failure of the initial decoding. The method may comprise an operation for performing additional decoding of the uplink data on the basis of the second frequency offset. The reference value may be identified on the basis of time differences between the plurality of reference signals in the time interval.

FIG. 7A

EP 4 633 098 A1

**Description**

**[Technical Field]**

The present disclosure relates to a wireless communication system, and more particularly, to an electronic device and a method for receiving signals in a wireless communication system.

**[Background Art]**

An electronic device may receive a signal transmitted from an external electronic device. The electronic device may perform decoding for the signal in order to obtain data included in the signal. For example, the electronic device may perform the decoding based on a reference signal.

**[Disclosure]**

**[Technical Solution]**

In embodiments, a method performed by a digital unit (DU) may comprise obtaining uplink data and a plurality of reference signals in a time interval, from a radio unit (RU). The method may comprise, based on phase information of the plurality of reference signals, identifying a first frequency offset. The method may comprise, based on the first frequency offset, performing initial decoding for the uplink data. The method may comprise, in response to a failure of the initial decoding, based on the first frequency offset and a reference value, identifying a second frequency offset. The method may comprise, based on the second frequency offset, performing additional decoding for the uplink data. The reference value may be identified based on a time difference between the plurality of reference signals in the time interval.

In embodiments, an electronic device for a digital unit (DU) may comprise a transceiver. The electronic device may comprise a processor. The processor may be configured to obtain, via the transceiver, uplink data and a plurality of reference signals in a time interval, from a radio unit (RU). The processor may be configured to, based on phase information of the plurality of reference signals, identify a first frequency offset. The processor may be configured to, based on the first frequency offset, perform initial decoding for the uplink data. The processor may be configured to, in response to a failure of the initial decoding, based on the first frequency offset and a reference value, identify a second frequency offset. The processor may be configured to, based on the second frequency offset, perform additional decoding for the uplink data. The reference value may be identified based on a time difference between the plurality of reference signals in the time interval.

**[Description of the Drawings]**

FIG. 1 illustrates an example of a wireless communication system.
FIG. 2A illustrates an example of a front haul interface.
FIG. 2B illustrates an example of a fronthaul interface of an open-radio access network (O-RAN).
FIG. 3A illustrates an example of a functional configuration of a distributed unit (DU).
FIG. 3B illustrates an example of a functional configuration of a radio unit (RU).
FIG. 4 illustrates an example of a function split between a DU and an RU.
FIG. 5 illustrates an example of a resource structure in a time domain and a frequency domain.
FIG. 6A illustrates an example of channels in a communication standard.
FIG. 6B illustrates an example of a demodulation reference signal (DMRS) in a subframe.
FIG. 7A illustrates an example of a wireless communication system for a high speed train (HST).
FIGS. 7B and 7C illustrate an example of a graph indicating a Doppler shift according to a flow of time.
FIG. 8A illustrates an example of an operation flow in which additional decoding is performed based on a frequency offset.
FIG. 8B illustrates an example of components of a receiver for performing additional decoding based on a frequency offset.
FIG. 9 illustrates an example of an operation flow in which additional decoding is performed based on an estimated frequency offset in an HST environment.
FIG. 10 illustrates an example of an operation flow in which one additional decoding is performed based on a frequency offset in an HST environment.
FIG. 11 illustrates an example of a graph indicating reception performance according to additional decoding based on a frequency offset.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signal (e.g., packet, message, signal, information, signaling), terms referring to resource (e.g., section, symbol, slot, subframe, radio frame, subcarrier, resource element (RE), resource block (RB), bandwidth part (BWP), occasion), terms referring to operation state (e.g., step, operation, procedure), terms referring to data (e.g., packet, message, user stream, information, bit, symbol, codeword), terms referring to channel, terms referring to network entity (e.g., distributed unit (DU), radio unit (RU), central unit (CU), CU-control plane(CP), CU-user plane(UP), open radio access network (O-RAN) DU (O-DU), O-RAN RU (O-RU), O-RAN CU (O-CU), O-RAN CU-CP (O-CU-UP), O-RAN CU-CP (O-CU-CP)), and terms referring to components of a device, used in the following description are exemplified for convenience of explanation. Therefore, the present disclosure is not limited to terms to be described below, and another term having an equivalent technical meaning may be used. In addition, a term such as '...unit, '...device, '...object, and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes embodiments using terms used in some communication standards (e.g., 3rd Generation Partnership Project (3GPP)), these are only examples for explanation. The embodiments of the present disclosure may be easily modified and applied to other communication or broadcast systems.

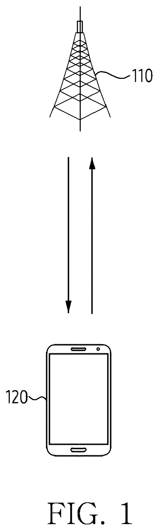

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

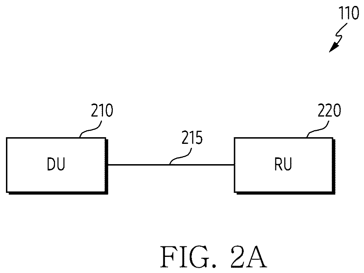

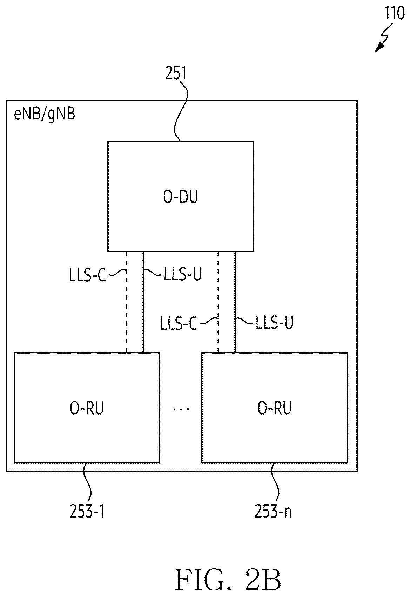

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a section between entities between a radio access network (RAN) and a base station.

FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), CP insertion (CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). In FIG. 2B, eNB or gNB is exemplified, as a base station 110 according to distributed deployment.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

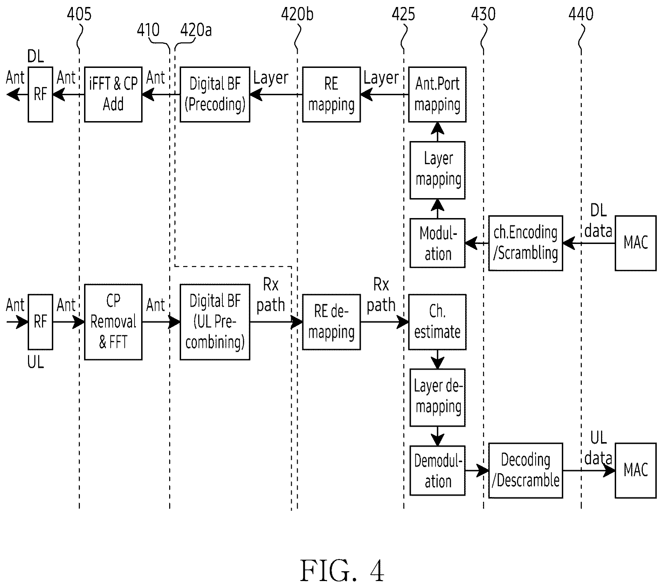

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described below, operations of the RU 220 may also be performed by the O-RU 253-1. A description of the RU 220 may be applied to the O-RU 253-1.

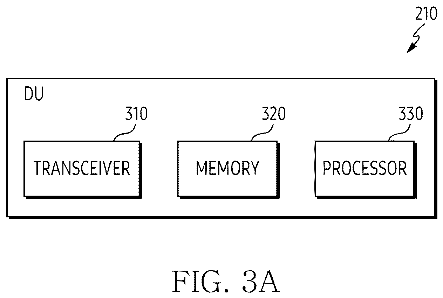

FIG. 3A illustrates an example of a functional configuration of a distributed unit (DU).

A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

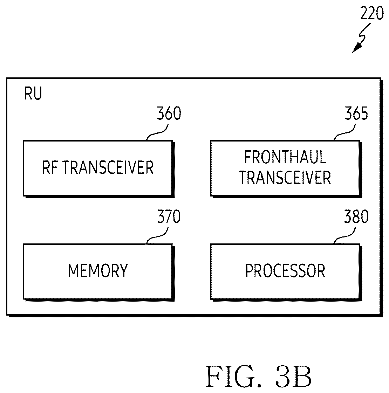

FIG. 3B illustrates an example of a functional configuration of a radio unit (RU).

A configuration exemplified in FIG. 3B, which is as a part of a base station, may be understood as a configuration of the RU 220 of FIG. 2A or the O-RU 253-1 of FIG. 2A. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS, or a power headroom report (PHR). Although only the RF transceiver 360 is illustrated in FIG. 3B, the RU 220 may include two or more RF transceivers according to another implementation.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU.

As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, a first function split in which the RU performs the RF function, and the DU performs the PHY function is substantially such that the PHY function is not implemented within the RU, and, for example, may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations described below may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.

5) ecpriPayload (2 bytes): This parameter indicates a byte size of a payload portion of the eCPRI message.

6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.

7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.

2) BandSector_ID: Aggregated cell identifier (identification of band and sector supported by O-RU).

3) CC_ID: CC_ID identifies carrier components supported by the O-RU.

4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.

1) sectionType=0: Used to indicate resource blocks or symbols not used in the DL or the UL.

2) sectionType=1: Used for most DL/UL wireless channels. Herein, "most" refers to channels that do not require time or frequency offsets such as those required for mixed numerology channels.

3) sectionType=2: reserved for further use

4) sectionType=3: PRACH and mixed-numerology channels. Channels that require time or frequency offsets or differ from the nominal SCS value(s).

5) sectionType=4: reserved for further use

6) sectionType=5: UE scheduling information. Transmits UE scheduling information so that the RU can perform real-time BF weight calculation (O-RAN optional BF method)

7) sectionType=6: Transmit UE-specific channel information. Periodically transmits UE channel information so that the RU can perform real-time BF weight calculation (O-RAN optional BF method)

8) sectionType=7: Used for LAA support

Open Radio Access Network (ORAN) is an organization that defines a fronthaul interface standard between DU and RU according to various functional split structures, and provides a standard interface in a split structure that applies Ethernet (e.g., 7-2x function split structure).

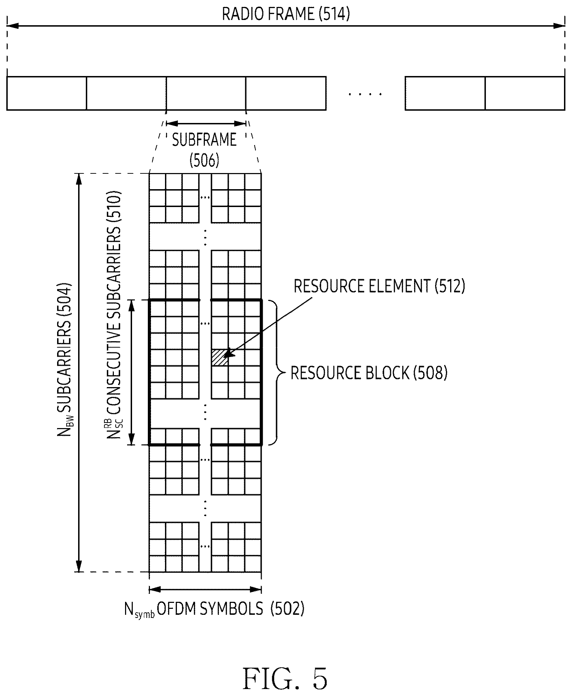

FIG. 5 illustrates an example of a resource structure in a time domain and a frequency domain. FIG. 5 illustrates a basic structure of a time-frequency domain, which is a radio resource domain in which data or a control channel is transmitted in downlink or uplink.

the frequency domain. A minimum transmission unit in the time domain is an OFDM symbol, and Nsymb OFDM symbols 502 are gathered to form a subframe 506. A length of the subframe 506 is defined as 1.0 ms, and a length of a radio frame 514 is defined as 10 ms. A minimum transmission unit in the frequency domain is a subcarrier, and a carrier bandwidth configuring a resource grid may be configured with NBW subcarriers 504.

A basic unit of a resource in the time-frequency domain is a resource element (hereinafter referred to as 'RE') 512, and may be indicated as an OFDM symbol index and a subcarrier index. A resource block may include a plurality of resource elements. In an LTE system, a resource block (RB) (or a physical resource block, hereinafter 'PRB') is defined as Nsymb consecutive OFDM symbols in the time domain and NSCRB consecutive subcarriers in the frequency domain. In an NR system, a resource block (RB) 508 may be defined as NSCRB consecutive subcarriers 510 in the frequency domain. One RB 508 includes NSCRB REs 512 on a frequency axis. In general, a minimum unit of transmission of data is RB and the number of subcarriers is NSCRB=12. The frequency domain may include common resource blocks (CRB). FIG. 5 illustrates an example of a resource structure in a time domain and a frequency domain in an LTE communication system, but the embodiment of the present disclosure is not limited thereto.

For example, in the NR communication system, a physical resource block (PRB) may be defined in a bandwidth part (BWP) on the frequency domain. The CRB and PRB numbers may be determined according to a subcarrier spacing. A data rate may increase in proportion to the number of RBs scheduled for a terminal. In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

[Table 1]

| Channel bandwidth [MHz] | SCS | 5 | 10 | 20 | 50 | 80 | 100 |
|---|---|---|---|---|---|---|---|
| | 15kHz | 25 | 52 | 106 | 207 | N/A | N/A |
| | 30kHz | 11 | 24 | 51 | 133 | 217 | 273 |
| Transmission Bandwidth Configuration $N_{RB}$ | 60kHz | N/A | 11 | 24 | 65 | 107 | 135 |

[Table 2]

| Channel bandwidth [MHz] | SCS | 50 | 100 | 200 | 400 |
|---|---|---|---|---|---|
| Transmission | 60kHz | 66 | 132 | 264 | N/A |
| Bandwidth Configuration $N_{RB}$ | 120kHz | 32 | 66 | 132 | 264 |

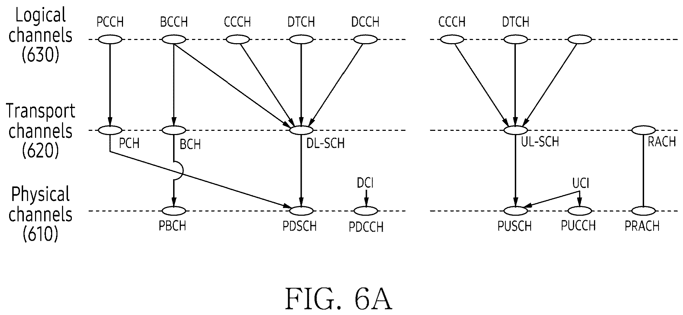

FIG. 6A illustrates an example of channels in a communication standard. The channels may include a physical channel 610, a transport channel 620, and a logical channel 630 according to layers defined in the communication standard. The channels of FIG. 6A are exemplary and may further include at least one other channel.

Referring to 6A, the physical channel 610 may provide functions (e.g., channel coding, HARQ processing, modulation, multi-antenna processing, and resource mapping) necessary to generate physical signals in a physical layer. In the physical layer, the physical signals are modulated in an OFDM method and may be transmitted in a wireless environment via a time-frequency resource (e.g., a resource in a resource grid of FIG. 5).

In downlink transmission, the physical channel 610 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and downlink control signals may refer to symbols transmitted through the PDCCH.

In uplink transmission, the physical channel 610 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and uplink control signals may refer to symbols corresponding to the UCI. For example, the UCI may include at least one of a scheduling request (SR), a hybrid automatic request (HARQ)-acknowledge (ACK) bit(s), or channel state information (CSI). In addition, DMRS for channel estimation and demodulation may be transmitted in the uplink in addition to the channels illustrated in FIG. 6A.

The transport channel 620 may connect a physical layer and a medium access channel (MAC) layer positioned at a higher level of the physical layer, and may be classified according to how data is transmitted through a wireless interface. In downlink, the transport channel 620 may include at least one of a paging channel (PCH) for paging, a broadcast channel (BCH) for broadcasting of system information, and a downlink shared channel (DL-SCH) for transmitting of downlink data. In uplink, the transport channel 620 may include at least one of a random access channel (RACH) for transmission of a random access preamble or an uplink shared channel (UL-SCH) for transmission of downlink data.

The logical channel 630 is positioned above the transport channel and is mapped to the transport channel 620. The logical channel 630 may be distinguished into a control channel for transmitting control region information and a traffic channel for transmitting user region information. The control channel of the logical channel 630 may include at least one of a paging control channel (PCCH), a broadcast control channel (BCCH), a common control channel (CCCH), or a dedicated control channel (DCCH). The traffic channel of the logical channel 630 may include a dedicated traffic channel (DTCH).

In describing embodiments of the present disclosure, 'data' may refer to sequences other than a reference signal. For example, 'data' obtained by a receiver in uplink communication may refer to signals transmitted through the PUSCH. However, the PUSCH is exemplary, and it is certain that the embodiments of the present disclosure may be applied to other channels (e.g., PDSCH, PBCH, PDCCH, and PUCCH) that require channel estimation.

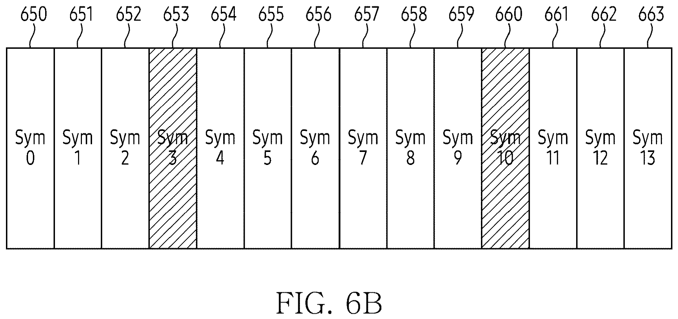

FIG. 6B illustrates an example of a demodulation reference signal (DMRS) in a subframe. The DMRS is a reference signal (RS) used to demodulate data. The DMRS may be used to estimate a channel to demodulate data (e.g., PDSCH, or PUSCH), and obtain a result of the channel estimation. Hereinafter, in order to describe operations using channel estimation of the present disclosure and DSMR for the channel estimation, uplink transmission of an LTE communication system is described as an example. However, the embodiments of the present disclosure are not limited to uplink of the LTE communication system. It is certain that the embodiments of the present disclosure may also be applied to downlink or another communication system. For example, the embodiments of the present disclosure may also be applied to an NR communication system.

Referring to FIG. 6B, a base station (e.g., the base station 110) may receive a signal from a terminal (e.g., the terminal 120). The terminal 120 may transmit an uplink signal to the base station 110. The received signal may include data (hereinafter, referred to as reception data) received on an uplink channel (e.g., the PUSCH). The received data may be transmitted in data symbols of a time domain. Also, the received signal may include reference signals (hereinafter referred to as reception reference signals) (e.g., the DMRS) for channel estimation and coherent demodulation of the data symbols. The reception reference signals may be transmitted in DMRS symbols of the time domain. The base station 110 may receive, from the terminal 120, the reception data in the data symbols of a subframe and receive the reception reference signals in the DMRS symbols. The subframe may include 14 symbols (e.g., a symbol #0 650, a symbol #1 651, a symbol #2 652, a symbol #3 653, a symbol #4 654, a symbol #5 655, a symbol #6 656, a symbol #7 657, a symbol #8 658, a symbol #9 659, a symbol #10 660, a symbol #11 661, a symbol #12 662, and a symbol #13 663). At least a portion of the 14 symbols may be used to carry DMRS sequences. For example, a section of the symbol #3 653 and a section of the symbol #10 660 may include DMRS symbols.

The base station 110 may estimate a channel between the base station 110 and the terminal 120 through the reception reference signals. The base station 110 may obtain information on a channel experienced by the reception reference signals. For example, the base station 110 may obtain information on a channel experienced by the reception data through a relationship between a position where the DMRS symbols of the reception reference signals are mapped and a position where the data symbols of the reception data are mapped. For example, the base station 110 may obtain the information on the channel experienced by the reception data by performing interpolation in a frequency domain or interpolation in the time domain based on the information on the channel experienced by the received reference signals. However, since the number of data symbols in one slot, which is a transmission unit, is generally greater than the number of DMRS symbols, an operation of estimating a channel experienced by each of the data symbols may require a large amount of calculation. In addition, since a calculation of the DMRS symbols themselves or inter-cell interference is not reflected, reception performance may not be guaranteed. To this end, the base station 110, which is a receiving end, may utilize various reception techniques.

Hereinafter, the present disclosure proposes a device and a method for identifying a frequency offset using a plurality of reference signals in a specific time interval in order for a distributed unit (DU) to decode data of signals obtained from a radio unit (RU). Hereinafter, the present disclosure is described based on an O-RAN interface having a 7-2x (e.g., the third functional split structure 420a or the fourth functional split 420b of FIG. 4) functional split structure. However, the embodiment of the present disclosure is not limited thereto, and the embodiment of the present disclosure may include an O-RAN interface having a structure split by substantially the same function.

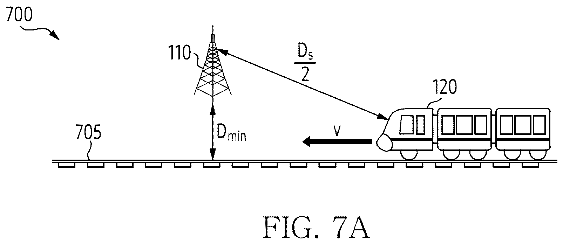

FIG. 7A illustrates an example of a wireless communication system for a high speed train (HST). The HST may include a device moving at high speed. For example, the HST may include a terminal 120. The terminal 120 of FIG. 7A may be an example of the terminal 120 of FIG. 1. A base station 110 of FIG. 7A may be an example of the base station 110 of FIG.

1. The same reference numbers may be used for the same description.

A communication environment 700 of FIG. 7A indicates a wireless communication system for an HST environment. The HST environment (or a HST condition) may indicate a communication environment in which a performance requirement of a channel (e.g., the physical uplink shared channel (PUSCH)) for the terminal 120 that moves at high speed are met. For example, the HST condition may be included in a propagation condition from among the performance requirement. The propagation condition may be associated with an RU (e.g., the RU 220 of FIG. 2A) included in the base station 110.

The communication environment 700 may include the terminal 120 and the base station 110 moving along a route 705. The communication environment 700 includes one base station 110 and one terminal 120, but an embodiment of the present disclosure is not limited thereto. For example, the communication environment 700 may include a plurality of base stations. For example, communication environment 700 may include a plurality of terminals.

According to an embodiment, the terminal 120 may move along the route 705. For example, the terminal 120 may move through a region adjacent to the base station 110 along the route 705. For example, the route 705 may include a railway track.

According to an embodiment, the base station 110 may be positioned in a region adjacent to the route 705. For example, the base station 110 may be positioned in the adjacent region of the route 705 along the route 705. For example, the adjacent region may be identified based on a distance D$_{-min}$ between the base station and the route 705.

According to an embodiment, while the terminal 120 moves along the route 705, the terminal 120 may transmit and receive a signal with the base station 110. For example, the terminal 120 may transmit a signal to the base station 110 or receive a signal from the base station 110. Since the terminal 120 moves at high speed, a Doppler shift may occur while the signal is propagated. The Doppler shift according to time may be defined as the following equation.

【Equation 1】

$$f_s\left(t\right) = f_d \cos\theta\left(t\right)$$

The f$_s$(t) may indicate the Doppler shift according to time, and the f$_d$ may indicate a maximum Doppler frequency. The t may represent time (unit: second). The $\cos\theta(t)$ of the equation may be defined as the following equation according to time.

【Equation 2】

$$\cos\theta(t) = \frac{D_s/2 - vt}{\sqrt{D_{min}^2 + (-1.5D_s + vt)^2}} \ , \qquad 0 \le t \le D_s/v$$

$$\cos\theta(t) = \frac{-1.5D_s + vt}{\sqrt{D_{min}^2 + (-1.5D_s + vt)^2}} \ , \qquad D_s/v \le t \le 2D_s/v$$

$$\cos\theta(t) = \cos\theta(t \bmod (2D_s/v)) \ , \qquad t > 2D_s/v$$

In the above-described equation, the D$_s$/2 may indicate an initial distance (unit: meter) of the terminal 120 from the base station 110, the D$_{min}$ may indicate a distance (unit: meter) between the base station 110 and the route 705, the v may indicate speed (unit: m/s) of the terminal 120, and the t may indicate time (unit: second). The initial distance, the distance between the base station and the route, the speed, and the maximum Doppler frequency may be referred to as a parameter for the HST condition. For example, the initial distance may indicate a distance from a radio unit (RU) (e.g., the RU 220 of FIG. 2A or the O-RU 253-1 of FIG. 2B) in which the base station 110 includes to the terminal 120. For example, the distance between the base station 110 and the route 705 may indicate a distance from the radio unit (RU) (e.g., the RU 220 of FIG. 2A or the O-RU 253-1 of FIG. 2B) in which the base station 110 includes to the route 705.

The parameter for the HST condition may be defined differently according to the speed (unit: km/h) of the terminal 120. For example, when the speed of the terminal 120 is less than or equal to 350 km/h, the parameter may be defined as illustrated in the following table.

[Table 3]

| Parameter | Value | |
|---|---|---|
| | Scenario 1 | Scenario 3 |
| $D_s$ | 1000 m | 300 m |
| $D_{min}$ | 50 m | 2 m |
| v | 350 km/h | 300 km/h |
| $F_d$ | 1340 Hz | 1150 Hz |

The scenario 1 may indicate an open space. The scenario 3 may indicate a tunnel for multi-antennas. The scenario 1 and the scenario 3 may be included in the HST condition.

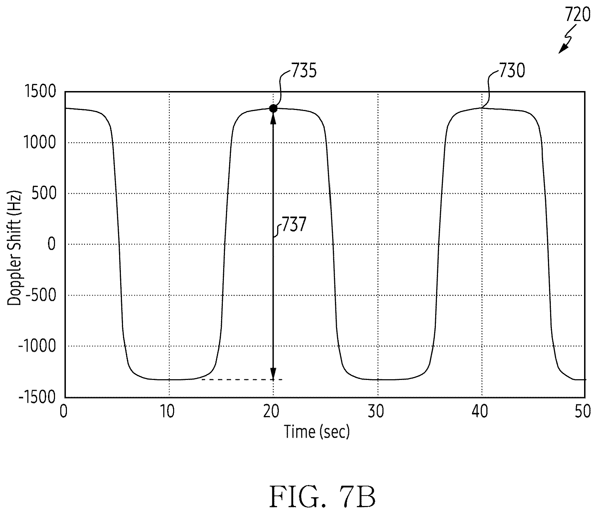

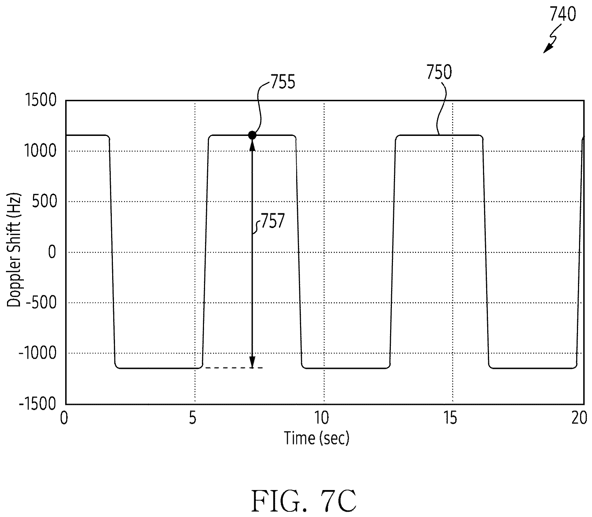

Referring to the above, unlike a general communication environment, in the communication environment 700 for HST, a Doppler frequency value of a signal transmitted by the terminal 120 moving at a relatively high speed may be greatly changed. Details of the change in the Doppler frequency value are described through a graph of FIGS. 7B and 7C.

FIGS. 7B and 7C illustrate an example of a graph indicating a Doppler shift according to a flow of time.

FIGS. 7B and 7C illustrate a graph 720 indicating a trajectory of a Doppler shift according to time of the scenario 1 and a graph 740 indicating a trajectory of the Doppler shift according to time of the scenario 3. A horizontal axis of each of the graph 720 and the graph 740 may indicate time (unit: second), and a vertical axis may indicate a Doppler shift (unit: Hertz (Hz)).

Referring to the graph 720, a line 730 may have a maximum Doppler frequency value 735 at about 20 seconds. For example, the maximum Doppler frequency value 735 may be about 1340 Hz. Referring to the line 730, a range 737 of a Doppler frequency value that may be changed according to a flow of time may have a size of about 2680 Hz. Referring to graph 740, a line 750 may have a maximum Doppler frequency value 755 at about 7 seconds. For example, the maximum Doppler frequency value 755 may be about 1150 Hz. Referring to the line 750, a range 757 of a Doppler frequency value that may be changed according to a flow of time may have a size of about 2300 Hz.

Referring to FIGS. 7A to 7C, in the communication environment 700, a Doppler frequency value may be greatly changed based on speed and a position of the terminal 120. For example, the Doppler frequency value may be changed in a range of about 2300 Hz to about 2680 Hz. However, the embodiment of the present disclosure is not limited thereto. For example, when the speed and the position of the terminal 120 are changed, a range in which the Doppler frequency value is changeable may be different.

The base station 110 may decode data in a specific time interval (e.g., a subframe). The data may be included in an uplink signal transmitted from the terminal 120 to the base station 110. For example, the subframe may be defined as 1 ms. In this case, a Doppler frequency value in the subframe may be regarded as fixed to a specific value. Considering the Doppler frequency value in the subframe as the specific value may be because a time unit (s) of the Doppler shift is longer than a time unit (ms) of the subframe. Accordingly, the Doppler frequency value may be similar to a carrier frequency offset in the subframe. The carrier frequency offset may be, hereinafter, referred to as a frequency offset. The base station 110 needs to estimate and correct the Doppler frequency (or the frequency offset) according to the Doppler shift for accurate decoding of the received data.

With respect to an uplink (UL) channel, a method of estimating a frequency offset may include a method of using a plurality of reference signals or a method of using a plurality of cyclic prefixes (CPs). The plurality of reference signals may include demodulation reference signals (DMRS).

For convenience of explanation, a method of estimating a frequency offset for a physical uplink shared channel (PUSCH) of long term evolution (LTE) is assumed. However, the embodiment of the present disclosure is not limited thereto, and the embodiment of the present disclosure may also be applied to an uplink signal (e.g., PUSCH of an NR communication system) of another communication system (e.g., an NR). The PUSCH (or an uplink signal based on the PUSCH) of LTE may include two DMRSs in one subframe. For example, referring to FIG. 6B, the two DMRSs may be mapped to the symbol #3 653 and the symbol #10 660 in the one subframe. For example, each of the two DMRSs in the subframe may be generated based on a different sequence and cyclic shift. For example, the sequence may include a Zadoff-chu sequence. The two DMRSs may be generated based on the different sequence and cyclic shift, but may include the same information.

In the example, a frequency offset may occur according to a Doppler shift between the two DMRSs of a signal transmitted while the terminal 120 is moving at high speed. In this case, the base station 110 receiving the signal may estimate the frequency offset based on a phase difference between the two DMRSs transmitted in different time resources (e.g., the symbol #3 653 and the symbol #10 660). An equation for estimating the frequency offset is as follows.

【Equation 3】

$$d_1 d_0^{\mathrm{H}} = e^{j 2\pi f_{FO} t_{RS\_interval}}$$

The $d_0$ may indicate a first DMRS of the two DMRSs, the $d_1$ may indicate a second DMRS of the two DMRSs, the H may indicate a Hermitian operator, the $f_{FO}$ may indicate an estimated frequency offset, and the $t_{RS\_interval}$ may indicate a time interval between reference signals (i.e., DMRSs).

Referring to the Equation, the $d_1 d_0^{\mathrm{H}}$ may be defined as a phase difference between the two DMRSs. The phase difference may be identified by measuring a phase of the signal transmitted from the terminal 120. The time interval, which is a value between time resources to which the two DMRSs are mapped, may be predefined. For example, the time interval between the two DMRSs mapped in one subframe may be 0.5 ms. Thus, the frequency offset may be estimated (or identified) based on the phase difference and the time interval.

In the PUSCH of LTE, since the time interval is fixed at 0.5 ms, a range of an estimable (or identifiable) frequency offset may be defined as about -1000 Hz to about 1000 Hz. In other words, a range in which the base station 110 may accurately identify the frequency offset of the received signal may be in a range of about -1000 Hz to about 1000 Hz. However, in a situation where phase ambiguity is considered, the base station 110 may find it difficult to accurately identify a frequency offset. For example, the base station 110 may not identify a frequency offset of about 1500 Hz, which is a value outside the range of the frequency offset.

Specifically, an example of the phase ambiguity is as follows. For example, when there is a frequency offset of about 1500 Hz in a communication environment, a phase difference between the two DMRSs is illustrated in the following equation.

【Equation 4】

$$e^{j 2\pi * 1500 Hz * 0.5 ms} = e^{\frac{j3}{2}\pi}$$

Referring to the above, when there is the frequency offset of about 1500 Hz between the DMRSs mapped in one subframe on the PUSCH of LTE, the phase difference corresponding to the frequency offset may be about $3/2\pi$. In contrast, when there is a frequency offset of about -500 Hz in the communication environment, a phase difference between the two DMRSs is illustrated in the following equation.

【Equation 5】

$$e^{j 2\pi * -500 Hz * 0.5 ms} = e^{\frac{-j1}{2}\pi} = e^{\frac{j3}{2}\pi}$$

Referring to the above, when the DMRSs mapped in one subframe on the PUSCH of LTE have the frequency offset of about -500 Hz, the phase difference corresponding to the frequency offset may be about $-1/2\pi$. In this case, the phase circulates based on $2\pi$, and about $-1/2\pi$ may be understood to be substantially the same as about $3/2\pi$. Therefore, it may be inaccurate for the base station 110 to identify the frequency offset as about 1500 Hz based on the measured phase difference of about $3/2\pi$.

In other words, the base station 110 may not accurately identify a frequency offset outside the range of the frequency offset according to the phase ambiguity only by information on the phase difference measured for the plurality of reference signals.

In addition, for example, the method using the plurality of reference signals may be similarly applied to the method of estimating a frequency offset using the plurality of CPs. For example, the CP may be included in each of symbols included in one subframe. An interval between concatenated CPs may be identical to a length of a time interval corresponding to one symbol. For example, the length of the time interval corresponding to the symbol may be about 6.667 $\mu$s. Considering the length of the time interval and the above-described equation, a size of a range of the frequency offset may be about 7500 Hz. In other words, the base station 110 may identify a frequency offset in the range of about 7500 Hz.

The base station 110 may estimate a frequency offset based on the two methods. However, since the maximum Doppler frequency value of the HST environment has a value greater than or equal to about 1150 Hz, the method of estimating a frequency offset based on the plurality of reference signals may have a limitation in that accurate estimation of the frequency offset is difficult. This is because the range of the frequency offset that is estimable based on the two DMRSs is about -1000 Hz to about 1000 Hz. Additionally, the method of estimating a frequency offset based on the plurality of CPs may have a limitation that is difficult to apply to a DU that performs decoding of a signal according to a base station having a 7-2x functional split structure (i.e., functional split between the DU and the RU). This is because the DU obtains a signal (or a signal of a frequency domain that is FFT transformed) in which the CP has already been removed from the RU. In addition, a signal (i.e., a signal received by the RU from the terminal) in a time domain may include signals transmitted from a plurality of terminals across a plurality of RBs (resource blocks). Accordingly, estimating the frequency offset based on the signal in the time domain may be incorrectly estimated according to a mutual interference of the signals transmitted from the plurality of terminals.

Hereinafter, a device and a method according to an embodiment of the present disclosure proposes a method in which a DU that obtains a signal in a frequency domain from an RU performs additional decoding based on a frequency offset identified using a plurality of reference signals. The additional decoding may indicate decoding performed based on a frequency offset (or a second frequency offset) changed by a reference value to an initially identified frequency offset (or a first frequency offset). For example, the additional decoding may indicate decoding performed after initial decoding is performed based on the first frequency offset. The initial decoding and at least one additional decoding may be performed on the same data (or uplink data). The device and the method according to an embodiment of the present disclosure may accurately identify the frequency offset based on the plurality of reference signals regardless of the phase ambiguity. Accordingly, the device and the method according to an embodiment of the present disclosure may accurately decode uplink data by compensating for the identified frequency offset. In addition, the device and the method according to an embodiment of the present disclosure may transmit a signal for a retransmission request to the terminal when a maximum number of decoding (or a reference number) is exceeded. In this case, the device and the method according to an embodiment of the present disclosure may efficiently decode the retransmitted signal based on at least a portion of log-likelihood ratio (LLR) values corresponding to the maximum number of decoding.

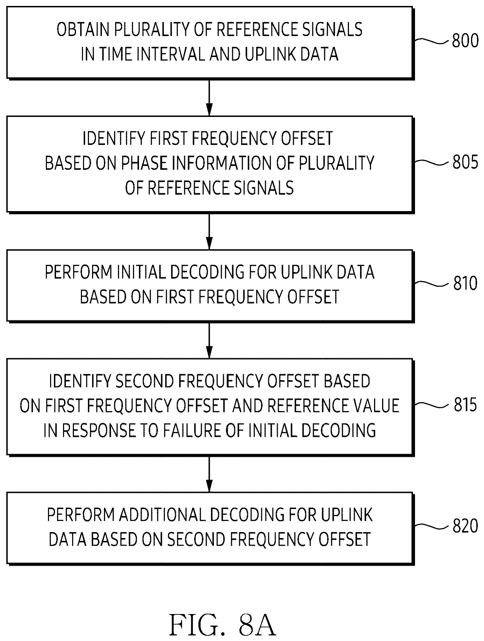

FIG. 8A illustrates an example of an operation flow in which additional decoding is performed based on a frequency offset.

At least some of operations of FIG. 8A may be performed by the DU 210 of FIG. 2A or the O-DU 251 of FIG. 2B. For example, a processor 330 of the DU 210 may perform that at least some of the operations of FIG. 8A.

According to an embodiment, in operation 800, the DU 210 may obtain a plurality of reference signals in a time interval and uplink data. For example, the DU 210 may obtain a reception signal from an RU 220. The reception signal may indicate a signal received by the RU 220 from a terminal transmitting the uplink data. The reception signal may indicate a signal in a frequency domain where a CP is removed from a received RF signal and a fast Fourier transform (FFT) is performed. For example, the reception signal may include the plurality of reference signals and the uplink data. The reception signal may indicate a signal in the time interval. The time interval may include a transmission time interval (TTI) or a subframe. For example, the plurality of reference signals may include DMRSs.

According to an embodiment, in operation 805, the DU 210 may identify a first frequency offset. For example, the DU 210 may identify the first frequency offset based on the plurality of reference signals. For example, the DU 210 may identify the first frequency offset based on a phase difference measured for the plurality of reference signals and a time difference between reception time of each of the plurality of reference signals. The first frequency offset may be referred to as a frequency offset for initial decoding.

According to an embodiment, in operation 810, the DU 210 may perform the initial decoding based on the first frequency offset. For example, the DU 210 may perform the initial decoding for the uplink data based on the first frequency offset.

The DU 210 according to an embodiment may identify whether decoding is successful. For example, the DU 210 may identify whether the initial decoding based on the first frequency offset is successful. For example, the DU 210 may identify whether the decoding is successful by detecting an error based on cyclic redundancy check (CRC) for the uplink data. For example, when a CRC result for the uplink data is a failure, the DU 210 may identify that the decoding of the uplink data fails. For example, when the CRC result for the uplink data is a pass, the DU 210 may identify that the decoding of the uplink data is successful. As described above, the DU 210 may identify whether the initial decoding based on the first frequency offset is successful using the CRC. In operation 810, when the initial decoding is successful, the DU 210 may obtain decoded uplink data.

The DU 210 according to an embodiment may identify a decoding number performed on the uplink data. For example, the DU 210 may identify the decoding number as 1 when only the initial decoding is performed on the uplink data. As will be described later, the DU 210 may identify the decoding number as 2 when one additional decoding is performed on the uplink data. Alternatively, the DU 210 may identify the decoding number as N when N-1 additional decoding is performed on the uplink data.

According to an embodiment, when the initial decoding fails, the DU 210 may store a first log-likelihood ratio (LLR) identified based on the first frequency offset. For example, the DU 210 may store the first LLR in a buffer (or a soft buffer).

The DU 210 according to an embodiment may identify whether the decode number exceeds a reference number N. For example, the reference number N may indicate a maximum number of decoding performable on the uplink data. According to an embodiment, the reference number may be identified based on at least one of a maximum Doppler frequency, or a throughput capable of decoding on the uplink data. For example, the maximum Doppler frequency may be identified based on at least one of a center frequency of a reception signal including the uplink data and the plurality of reference signals, speed of a terminal associated with the reception signal, and a distance between the RU and a route along which the terminal moves. The speed of the terminal may indicate a maximum speed at which the terminal may move while moving the route. The route may include a railway track along which the terminal moves. The distance between the RU and the route along which the terminal moves may include a minimum distance between the RU and the railway track. For example, the throughput may indicate a resource for additional decoding performed by the DU 210 by changing a frequency offset in order to estimate the frequency offset (or Doppler offset) outside an estimation range (e.g., about -1000Hz to about 1000Hz). For example, the resource may include power, time, and memory.

According to an embodiment, in operation 815, the DU 210 may identify a second frequency offset based on the first frequency offset and a reference value in response to a failure of the initial decoding. For example, the DU 210 may identify whether the decoding number is less than or equal to the reference number N in response to the failure of the initial decoding. When the decoding number is less than or equal to the reference number, the DU 210 may identify the second frequency offset based on the first frequency offset and the reference value. The reference value may indicate a value scaled by an integer multiple of a size of the estimation range. For example, when the estimation range is in a range of about -1000 Hz to about 1000 Hz, the size of the estimation range may be 2000 Hz. For example, the reference value may be defined as 2000Hz*k (the k is an integer other than 0). The second frequency offset may indicate a frequency offset for the first additional decoding. In FIG. 8A, only the second frequency offset identified based on the first frequency offset is illustrated, but an embodiment of the present disclosure is not limited thereto. For example, when a plurality of additional decodings are performed on the uplink data, new frequency offsets may be identified based on previous frequency offsets. The new frequency offsets may include a third frequency offset, a fourth frequency offset, ..., an N-th frequency offset. For example, the third frequency offset may be identified based on the second frequency offset and the reference value. The third frequency offset may indicate a frequency offset for a second additional decoding. The fourth frequency offset may be identified based on the third frequency offset and the reference value. The fourth frequency offset may indicate a frequency offset for a third additional decoding. The N-th frequency offset may indicate a frequency offset for the N-1th additional decoding (i.e., decoding of N times corresponding to the maximum number).

For example, the DU 210 needs to define ranges of a plurality of frequency offsets to identify a frequency offset without phase ambiguity. For example, for the plurality of reference signals DMRS having a time interval of 0.5 ms, a base station 110 may define a range of a frequency offset corresponding to a phase difference of $-\pi$ to $\pi$ as about -1000 Hz to about 1000 Hz. The range of about -1000Hz to about 1000Hz may be referred to as the estimation range. In addition, the base station 110 may define a range of a frequency offset corresponding to a phase difference of $-3\pi$ to $-\pi$ as about -3000Hz to about -1000Hz. In addition, the base station 110 may define a range of a frequency offset corresponding to a phase difference of $-5\pi$ to $-3\pi$ as about -5000Hz to about -3000Hz. In addition, the base station 110 may define a range of a frequency offset corresponding to a phase difference of $\pi$ to $3\pi$ as about 1000 Hz to about 3000 Hz. In addition, the base station 110 may define a range of a frequency offset corresponding to a phase difference of $3\pi$ to $5\pi$ as about 3000 Hz to about 5000 Hz. In the examples, the reference value may indicate a weight for changing the second frequency offset to a specific value within each interval. For example, when the first frequency offset is -500 Hz, the second frequency offset may be identified as 1500 Hz according to a reference value of +2000 Hz (=2000*1). Alternatively, when the first frequency offset is -500 Hz, the second frequency offset may be identified as -2500 Hz according to a reference value of -2000 Hz (=2000*-1). Alternatively, when the first frequency offset is -500 Hz, the second frequency offset may be identified as -4500 Hz according to a reference value of -4000 Hz (=2000*-2). Alternatively, when the first frequency offset is -500 Hz, the second frequency offset may be identified as 3500 Hz according to a reference value of +4000 Hz (=2000*2).

According to an embodiment, in operation 820, the DU 210 may perform additional decoding based on the second frequency offset. For example, the DU 210 may perform the additional decoding on the uplink data based on the second frequency offset. The additional decoding may indicate decoding performed again after the initial decoding is performed on the uplink data. For example, the additional decoding may be performed based on one frequency offset from among the second frequency offset to the N-th frequency offset.

According to an embodiment, the DU 210 may identify whether the additional decoding is successful. For example, the DU 210 may identify whether the additional decoding based on the second frequency offset is successful. For example, the DU 210 may identify whether the additional decoding is successful by detecting an error based on cyclic redundancy check (CRC) on the uplink data.

According to an embodiment, the DU 210 may store a second log-likelihood ratio (LLR) identified based on the second frequency offset when the additional decoding fails. For example, the DU 210 may store the second LLR in a buffer (or a soft buffer). Similarly, when the N-1th additional decoding fails, the DU 210 may store an N LLR identified based on the N-th frequency offset in the buffer. In other words, the DU 210 may store N LLR values in N buffers when decoding of N times is performed.

According to an embodiment, when the additional decoding fails, the DU 210 may identify whether the decoding number for the additional decoding exceeds the reference number. When the decoding number is less than or equal to the reference number, the DU 210 may identify a new frequency offset (e.g., the third frequency offset). In addition, the DU 210 may perform additional decoding on the uplink data based on the new frequency offset. The additional decoding may be repeatedly performed while changing a new frequency offset until the decoding number exceeds the reference number. In other words, operation 815 and operation 820 may be repeated until the decoding number exceeds the reference number.

According to an embodiment, the DU 210 may transmit a signal for a retransmission request of the uplink data in response to identifying that the decoding number for the uplink data exceeds the reference number. For example, the DU 210 may transmit the signal for the retransmission request of the uplink data to the terminal via the RU 220 in response to the decoding number performed on the uplink data exceeding the reference number. Thereafter, according to an embodiment, the DU 210 may obtain uplink data retransmitted from the RU 220. The DU 210 may perform retransmission decoding on the retransmitted uplink data. For example, the retransmission decoding may indicate an initial decoding for the retransmitted uplink data. The retransmitted uplink data may be included in a signal in another time interval different from the time interval. For example, when the uplink data is included in a signal obtained in the time interval (e.g., the subframe or the TTI), the other time interval may indicate the next time interval that is continuous with the time interval. In addition, for example, the other time interval may indicate a time interval after a predetermined time elapses from the time interval.

According to an embodiment, the DU 210 may perform the retransmission decoding based on an LLR value stored in at least one buffer. For example, the DU 210 may perform HARQ combining based on the LLR for the retransmitted uplink data and one LLR value of the N stored LLR values. For example, the one LLR value may indicate an LLR identified based on the same frequency offset as the estimated frequency offset for decoding the retransmitted uplink data. In addition, for example, the DU 210 may perform the HARQ combining based on the LLR for the retransmitted uplink data and the stored one LLR value. The stored one LLR value may be identified based on a pSINR, an LLR size, or a summed LLR value. Based on the LLR combined according to the HARQ combining, the DU 210 may perform the retransmission decoding.

Referring to the above, a device and a method according to an embodiment of the present disclosure may accurately identify a frequency offset based on the plurality of reference signals regardless of the phase ambiguity. Accordingly, the device and the method according to an embodiment of the present disclosure may accurately decode uplink data by compensating for the identified frequency offset. In addition, the device and the method according to an embodiment of the present disclosure may transmit a signal for the retransmission request to the terminal when the maximum number of decoding (or the reference number) is exceeded. In this case, the device and the method according to an embodiment of the present disclosure may efficiently decode the retransmitted signal based on at least a portion of log-likelihood ratio (LLR) values corresponding to the maximum number of decoding.

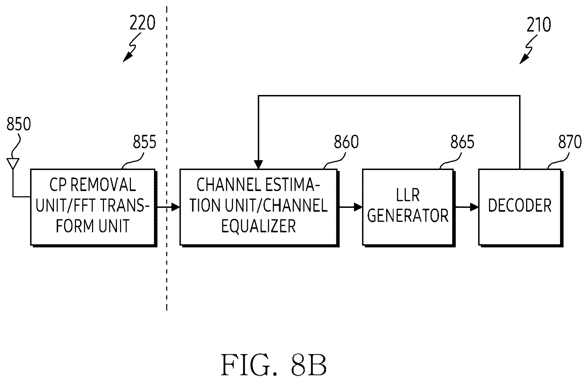

FIG. 8B illustrates an example of components of a receiver for performing additional decoding based on a frequency offset.

The receiver may be included in the RU 220 of FIG. 2A (or the O-RU 253-1 of FIG. 2B) and the DU 210 of FIG. 2A (or the O-DU 251 of FIG. 2B). A structure of the receiver illustrated in FIG. 8B is merely exemplary for convenience of description, and an embodiment of the present disclosure is not limited thereto. For example, the receiver may further or less include at least one component.

Referring to FIG. 8B, the receiver may receive an RF signal via a receiving antenna 850. The receiver may receive the RF signal transmitted from a terminal (e.g., the terminal 120 of FIG. 1) via the receiving antenna 850. For example, the receiving antenna 850 may include a plurality of antennas. The RF signal may include a plurality of reference signals and uplink data. The receiver may include a CP removal unit/FFT transform unit 855 to remove a CP of the RF signal and perform FFT transformation. The RF signal on which the FFT transformation has been performed may be a signal in a frequency domain. According to a functional split of 7-2x, the receiving antenna 850 and the CP removal unit/FFT transform unit 855 of the receiver may be included in the RU 220.

The receiver may include a channel estimation unit/channel equalizer 860, an LLR generator 865, and a decoder 870. The channel estimation unit may identify a frequency offset based on the plurality of reference signals included in the RF signal transformed into the signal in the frequency domain. The channel equalizer may identify a metric (e.g., pSINR) indicating reception performance based on the identified frequency offset. The LLR generator 865 may identify an LLR value for the RF signal. The decoder 870 may perform decoding based on the identified LLR value. For example, the decoder 870 may decode the uplink data of the RF signal based on the identified frequency offset.

According to an embodiment, when the decoding fails in the decoder 870, the channel estimation unit may identify a changed frequency offset based on a previous frequency offset and a reference value. Based on the changed frequency offset, the decoder 870 may perform decoding again. The decoding may indicate additional decoding.

According to the functional split of 7-2x, the channel estimation unit/channel equalizer 860, the LLR generator 865, and the decoder 870 of the receiver may be included in the DU 210. In addition, although not illustrated in FIG. 8B, the DU 210 may include a buffer to store the LLR value identified through the LLR generator 865. For example, the buffer may include a soft buffer.

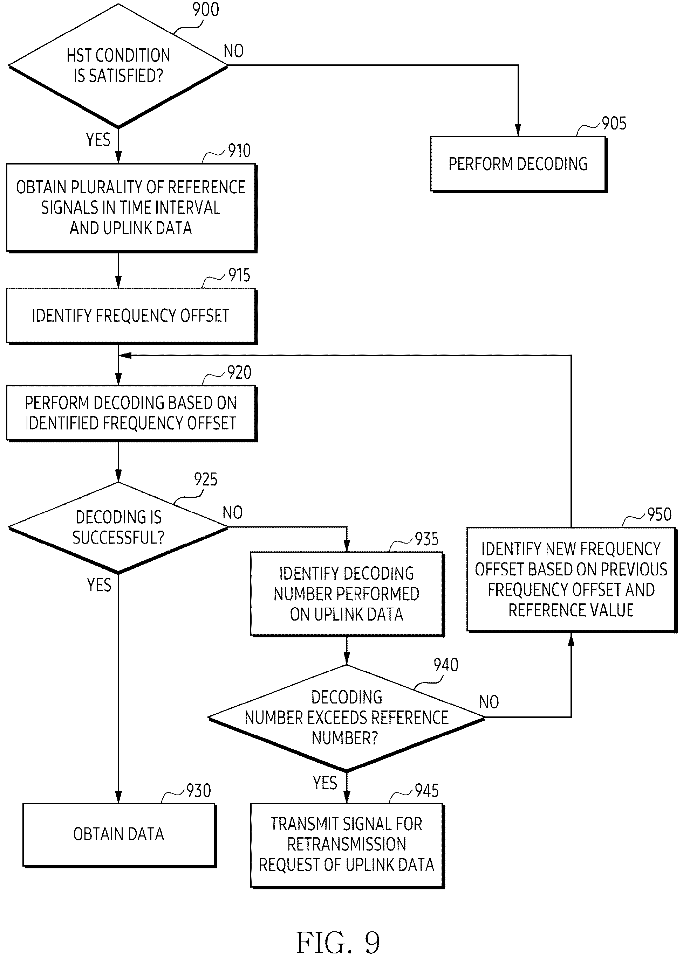

FIG. 9 illustrates an example of an operation flow in which additional decoding is performed based on an estimated frequency offset in an HST environment.

At least some of operations of FIG. 9 may be performed by the DU 210 of FIG. 2A or the O-DU 251 of FIG. 2B. For example, a processor 330 of the DU 210 may perform the at least some of the operations of FIG. 9.

Referring to FIG. 9, according to an embodiment, in operation 900, the DU 210 may identify whether an HST condition is satisfied. For example, the DU 210 may identify whether the HST condition is satisfied, the HST condition being for determining whether a frequency offset identified according to a time difference between a plurality of reference signals is in an estimation range according to a propagation condition associated with an RU 220 (or the O-RU 253-1 of FIG. 2B). For example, the propagation condition may be included in a performance requirement of a base station including the DU 210 and the RU 220. For example, the estimation range may be about -1000Hz to about 1000Hz when a time interval between two DMRSs in one subframe on a PUSCH of LTE is 0.5ms.

According to an embodiment, the DU 210 may identify whether the HST condition is satisfied based on at least one of information indicating speed of a terminal that transmitted uplink data, a frequency offset estimated from another channel different from a channel associated with the uplink data, setting information for the DU 210, or a frequency offset of a non-terrestrial network (NTN).

For example, the DU 210 may identify whether the HST condition is satisfied based on the speed of the terminal that transmitted the uplink data. For example, the terminal may transmit information indicating the speed of the terminal to the DU 210 via the RU 220. The DU 210 may identify whether the HST condition is satisfied based on the information obtained via the RU 220. For example, when the speed of the terminal is greater than or equal to reference speed (e.g., 300 km/h), the DU 210 may identify that the HST condition is satisfied.

For example, the DU 210 may identify whether the HST condition is satisfied based on the frequency offset estimated from the other channel different from the channel associated with the uplink data. For example, the channel associated with the uplink data may include the PUSCH. For example, the other channel may include a physical random access channel (PRACH). However, an embodiment of the present disclosure is not limited thereto. For example, the other channels may include a physical broadcast channel (PBCH) and a physical uplink control channel (PUCCH). For example, when a frequency offset estimated based on the PRACH exceeds the estimation range, the DU 210 may identify that the HST condition is satisfied.

For example, the DU 210 may identify whether the HST condition is satisfied based on the setting information for the DU 210. For example, the setting information may include information for indicating that the DU 210 and the RU 220 associated with the DU 210 are base stations for supporting the terminal (or HST) moving at high speed. When the setting information is set, the DU 210 may identify that the HST condition is satisfied.

For example, the DU 210 may identify whether the HST condition is satisfied based on the frequency offset of the NTN. For example, the DU 210 may receive frequency offset information for the terminal transmitting the uplink data connected to the NTN and the DU 210 from a node for the NTN connected to the DU 210. The node for the NTN may include a satellite. In addition, for example, the DU 210 may receive frequency offset information from the terminal transmitting the uplink data connected to the DU 210 and the NTN. The frequency offset information may include a frequency offset for a signal between the terminal transmitting the uplink data and the NTN. According to an embodiment, the DU 210 may identify that the HST condition is satisfied based on the frequency offset information.

In operation 900, when the HST condition is satisfied, the DU 210 may perform operation 910. Alternatively, when the HST condition is not satisfied, the DU 210 may perform operation 905. However, the embodiment of the present disclosure is not limited thereto. According to an embodiment, the DU 210 may perform operation 910 without identifying whether the HST condition is satisfied in operation 900.

According to an embodiment, in operation 905, the DU 210 may perform decoding. For example, the DU 210 may perform a general decoding operation in response to identifying that the HST condition is not satisfied in operation 900. For example, the DU 210 may receive uplink data and a plurality of reference signals. The DU 210 may identify a frequency offset based on the plurality of reference signals that are received. The DU 210 may decode the uplink data based on the identified frequency offset. The decoding for the uplink data may succeed. The frequency offset may be a value in the estimation range.

According to an embodiment, in operation 910, the DU 210 may obtain a plurality of reference signals in a time interval and uplink data. For example, the DU 210 may obtain a reception signal from the RU 220. The reception signal may indicate a signal received by the RU 220 from the terminal transmitting the uplink data. The reception signal may indicate a signal in a frequency domain where a CP is removed from a received RF signal and fast Fourier transform (FFT) is performed. For example, the reception signal may include the plurality of reference signals and the uplink data. The reception signal may indicate a signal in the time interval. The time interval may include a transmission time interval (TTI) or a subframe. For example, the plurality of reference signals may include DMRSs.

According to an embodiment, in operation 915, the DU 210 may identify a frequency offset. For example, the DU 210 may identify the frequency offset based on the plurality of reference signals. For example, the DU 210 may identify a first frequency offset based on a phase difference measured for the plurality of reference signals and a time difference between reception time of each of the plurality of reference signals. The first frequency offset may be referred to as a frequency offset for initial decoding.

According to an embodiment, in operation 920, the DU 210 may perform decoding based on the identified frequency offset. For example, the DU 210 may perform the initial decoding on the uplink data based on the first frequency offset. The decoding performed for the first time on the uplink data may be referred to as initial decoding. The initial decoding may be performed based on the first frequency offset.

According to an embodiment, in operation 925, the DU 210 may identify whether the decoding is successful. For example, the DU 210 may identify whether the initial decoding based on the first frequency offset is successful. For example, the DU 210 may identify whether the decoding is successful by detecting an error based on cyclic redundancy check (CRC) for the uplink data. For example, when a CRC result for the uplink data is a failure, the DU 210 may identify that the decoding of the uplink data fails. For example, when the CRC result for the uplink data is a pass, the DU 210 may identify that the decoding of the uplink data is successful. As described above, the DU 210 may identify whether the initial decoding based on the first frequency offset is successful using the CRC. When the initial decoding is successful in operation 925, operation 930 may be performed. In operation 930, according to an embodiment, as the initial decoding is successful, the DU 210 may obtain decoded uplink data. Alternatively, when the initial decoding fails in operation 925, operation 935 may be performed.

In operation 935, according to an embodiment, the DU 210 may identify a decoding number performed on the uplink data. For example, the DU 210 may identify the decoding number as 1 when only the initial decoding is performed on the uplink data. As will be described later, the DU 210 may identify the decoding number as 2 when one additional decoding is performed on the uplink data. Alternatively, the DU 210 may identify the decoding number as N when additional decoding of N-1 times is further performed on the uplink data.

Although not illustrated in FIG. 9, according to an embodiment, the DU 210 may store a first log-likelihood ratio (LLR) identified based on the first frequency offset when the initial decoding fails. For example, the DU 210 may store the first LLR in a buffer (or a soft buffer).

In operation 940 according to an embodiment, the DU 210 may identify whether the decoding number exceeds a reference number N. For example, the reference number N may indicate a maximum number of decoding performable on the uplink data. According to an embodiment, the reference number may be identified based on at least one of a maximum Doppler frequency or a throughput capable of decoding on the uplink data. For example, the maximum Doppler frequency may be identified based on at least one of a center frequency of a reception signal including the uplink data and the plurality of reference signals, speed of a terminal associated with the reception signal, and a distance between the RU and a route along which the terminal moves. The speed of the terminal may indicate a maximum speed at which the terminal may move while moving the route. The route may include a railway track along which the terminal moves. The distance between the RU and the route along which the terminal moves may include a minimum distance between the RU and the railway track. For example, the throughput may indicate a resource for additional decoding performed by the DU 210 by changing a frequency offset in order to estimate the frequency offset (or Doppler offset) outside the estimation range (e.g., about -1000Hz to about 1000Hz). For example, the resource may include power, time, and memory.

When the decoding number exceeds the reference number in operation 940, the DU 210 may perform operation 945. Alternatively, when the decoding number is less than or equal to the reference number, the DU 210 may perform operation 950.

According to an embodiment, in operation 950, the DU 210 may identify a new frequency offset based on the previous frequency offset and a reference value. For example, the DU 210 may identify a second frequency offset, which is the new frequency offset, based on the first frequency offset and the reference value. The reference value may indicate a value scaled by an integer multiple of a size of the estimation range. For example, when the estimated range is in a range of about -1000 Hz to about 1000 Hz, the size of the estimation range may be 2000 Hz. For example, the reference value may be defined as 2000Hz*k (the k is an integer other than 0). The second frequency offset may indicate a frequency offset for the first additional decoding. The new frequency offset may include a third frequency offset, a fourth frequency offset, ..., an N-th frequency offset. For example, the third frequency offset may be identified based on the second frequency offset and the reference value. The third frequency offset may indicate a frequency offset for a second additional decoding. The fourth frequency offset may be identified based on the third frequency offset and the reference value. The fourth frequency offset may indicate a frequency offset for a third additional decoding. The N-th frequency offset may indicate a frequency offset for the N-1th additional decoding (i.e., decoding of N times corresponding to the maximum number).

For example, the DU 210 needs to define ranges of a plurality of frequency offsets to identify a frequency offset without phase ambiguity. For example, for the plurality of reference signals DMRS having a time interval of 0.5 ms, a base station 110 may define a range of a frequency offset corresponding to a phase difference of -π to π as about -1000 Hz to about 1000 Hz. The range of about -1000Hz to about 1000Hz may be referred to as the estimation range. In addition, the base station 110 may define a range of a frequency offset corresponding to a phase difference of -3π to -π as about -3000Hz to about -1000Hz. In addition, the base station 110 may define a range of a frequency offset corresponding to a phase difference of -5π to -3π as about -5000Hz to about -3000Hz. In addition, the base station 110 may define a range of a frequency offset corresponding to a phase difference of π to 3π as about 1000 Hz to about 3000 Hz. In addition, the base station 110 may define a range of a frequency offset corresponding to a phase difference of 3π to 5π as about 3000 Hz to about 5000 Hz. In the examples, the reference value may indicate a weight for changing the second frequency offset to a specific value within each interval. For example, when the first frequency offset is -500 Hz, the second frequency offset may be identified as 1500 Hz according to a reference value of +2000 Hz (=2000*1). Alternatively, when the first frequency offset is -500 Hz, the second frequency offset may be identified as -2500 Hz according to a reference value of -2000 Hz (=2000*-1). Alternatively, when the first frequency offset is -500 Hz, the second frequency offset may be identified as -4500 Hz according to a reference value of -4000 Hz (=2000*-2). Alternatively, when the first frequency offset is -500 Hz, the second frequency offset may be identified as 3500 Hz according to a reference value of +4000 Hz (=2000*2).

According to an embodiment, the DU 210 may perform operation 920 again after performing operation 950. For example, the DU 210 may perform decoding based on the identified frequency offset in operation 920. For example, the DU 210 may perform additional decoding on the uplink data based on the second frequency offset. The additional decoding may indicate decoding performed again after the initial decoding is performed on the uplink data. For example, the additional decoding may be performed based on one frequency offset from among the second frequency offset to the N-th frequency offset. According to an embodiment, in response to the performance of the additional decoding, the DU 210 may perform operation 925 to operation 940 again.

Although not illustrated in FIG. 9, according to an embodiment, in operation 935, the DU 210 may store a second log-likelihood ratio (LLR) identified based on the second frequency offset when the additional decoding fails. For example, the DU 210 may store the second LLR in a buffer (or a soft buffer). Similarly, when the N-1th additional decoding fails, the DU 210 may store an N LLR identified based on the N-th frequency offset in the buffer. In other words, the DU 210 may store N LLR values in N buffers when decoding of N times is performed.

According to an embodiment, the DU 210 may select one of the first LLR and the second LLR and store it in the buffer. For example, an LLR in which a pSINR is maximum from among the two LLR values may be identified. For example, the pSINR may indicate a metric for indicating reception performance identified in a channel equalizer (e.g., the channel equalizer 860 of FIG. 8B). In addition, for example, the DU 210 may identify an LLR in which a LLR value is maximum from among the two LLR values. In addition, for example, the DU 210 may identify an LLR in which the two LLR values are summed. Thereafter, the DU 210 may store the identified LLR in the buffer. Similarly, when the N-1th additional decoding fails, the DU 210 may identify an N LLR based on the N-th frequency offset. According to an embodiment, the DU 210 may identify one LLR from among the N LLR and another LLR value stored in the buffer, and may store the identified LLR in the buffer.

In other words, the DU 210 may store up to N LLR values based on implementation complexity and reception performance of the DU 210. For example, when only high reception performance is considered, the DU 210 may store and decode all N LLR values. However, the DU 210 needs to include N buffers to store all N LLR values. As the N buffers (i.e., a buffer size) included in the DU 210 increase, the implementation complexity of the DU 210 may increase. Accordingly, DU 210 may identify the number of LLR values to be stored based on a reception environment. For example, the reception environment may be identified based on at least one of a modulation and coding scheme (MCS), a pSINR, the number of allocated RBs, or the number of antennas.

In operation 940 performed again, the DU 210 may perform operation 945 in response to identifying that the decoding number for the uplink data exceeds the reference number. In operation 945, according to an embodiment, the DU 210 may transmit a signal for a retransmission request of the uplink data. For example, the DU 210 may transmit the signal for the retransmission request of the uplink data to the terminal via the RU 220 in response to the decoding number performed on the uplink data exceeding the reference number. Thereafter, according to an embodiment, the DU 210 may obtain uplink data retransmitted from the RU 220. The DU 210 may perform retransmission decoding for the retransmitted uplink data. For example, the retransmission decoding may indicate an initial decoding for the retransmitted uplink data. The retransmitted uplink data may be included in a signal in another time interval different from the time interval. For example, when the uplink data is included in a signal obtained in the time interval (e.g., the subframe or the TTI), the other time interval may indicate the next time interval that is continuous with the time interval. In addition, for example, the other time interval may indicate a time interval after a predetermined time elapses from the time interval.

Although not illustrated in FIG. 9, according to an embodiment, the DU 210 may perform the retransmission decoding based on an LLR value stored in at least one buffer. For example, the DU 210 may perform HARQ combining based on the LLR for the retransmitted uplink data and one LLR value of the N stored LLR values. For example, the one LLR value may indicate an LLR identified based on the same frequency offset as the estimated frequency offset for decoding the retransmitted uplink data. In addition, for example, the DU 210 may perform the HARQ combining based on the LLR for the retransmitted uplink data and the stored one LLR value. The stored one LLR value may be identified based on a pSINR, an LLR size, or a summed LLR value. Based on the LLR combined according to the HARQ combining, the DU 210 may perform the retransmission decoding.

Referring to the above, a device and a method according to an embodiment of the present disclosure may accurately identify a frequency offset based on the plurality of reference signals regardless of the phase ambiguity. Accordingly, the device and the method according to an embodiment of the present disclosure may accurately decode uplink data by compensating for the identified frequency offset. In addition, the device and the method according to an embodiment of the present disclosure may transmit the signal for the retransmission request to the terminal when the maximum number of decoding (or the reference number) is exceeded. In this case, the device and the method according to an embodiment of the present disclosure may efficiently decode the retransmitted signal based on at least a portion of log-likelihood ratio (LLR) values corresponding to the maximum number of decoding.

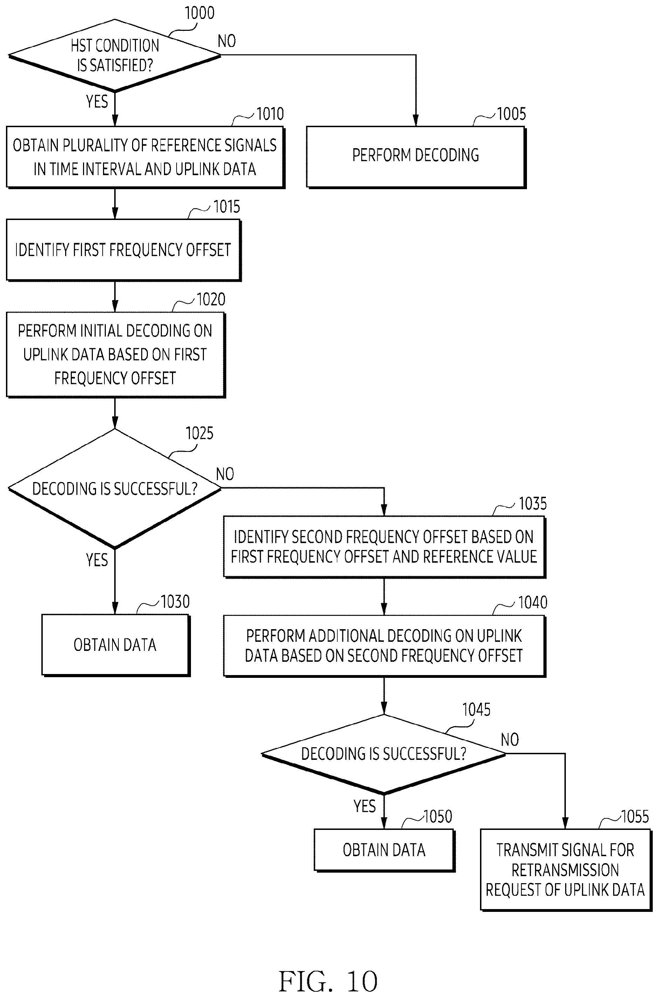

FIG. 10 illustrates an example of an operation flow in which one additional decoding is performed based on a frequency offset in an HST environment.

At least some of operations of FIG. 10 may be performed by the DU 210 of FIG. 2A or the DU 251 of FIG. 2B. For example, a processor 330 of the DU 210 may perform the at least some of the operations of FIG. 10.

The operation flow of FIG. 10 may indicate an example of the operation flow of FIG. 9. For example, the operation flow of FIG. 10 may indicate a case where a reference number identified based on a maximum Doppler frequency is 2. For example, as illustrated in the graph 720 of FIG. 7B, the maximum Doppler frequency may be about 1340 Hz, and a time interval between a plurality of reference signals DMRS may be 0.5 ms. The case where the reference number is 2 may indicate a case in which additional decoding is performed once.

Referring to FIG. 10, according to an embodiment, in operation 1000, the DU 210 may identify whether an HST condition is satisfied. For example, the DU 210 may identify whether the HST condition is satisfied, the HST condition being for determining whether a frequency offset identified according to a time difference between a plurality of reference signals is in an estimation range according to a propagation condition associated with an RU 220 (or the O-RU 253-1 of FIG. 2B). For example, the propagation condition may be included in a performance requirement of a base station including the DU 210 and the RU 220. For example, the estimation range may be about -1000Hz to about 1000Hz when a time interval between two DMRSs in one subframe on a PUSCH of LTE is 0.5ms.

According to an embodiment, the DU 210 may identify whether the HST condition is satisfied based on at least one of information indicating speed of a terminal that transmitted uplink data, a frequency offset estimated from another channel different from a channel associated with the uplink data, setting information for the DU 210, or a frequency offset of a non-terrestrial network (NTN).

For example, the DU 210 may identify whether the HST condition is satisfied based on the speed of the terminal that transmitted the uplink data. For example, the terminal may transmit information indicating the speed of the terminal to the DU 210 via the RU 220. The DU 210 may identify whether the HST condition is satisfied based on the information obtained via the RU 220. For example, when the speed of the terminal is greater than or equal to reference speed (e.g., 300 km/h), the DU 210 may identify that the HST condition is satisfied.

For example, the DU 210 may identify whether the HST condition is satisfied based on the frequency offset estimated from the other channel different from the channel associated with the uplink data. For example, the channel associated with the uplink data may include the PUSCH. For example, the other channel may include a physical random access channel (PRACH). However, an embodiment of the present disclosure is not limited thereto. For example, the other channels may include a physical broadcast channel (PBCH) and a physical uplink control channel (PUCCH). For example, when a frequency offset estimated based on the PRACH exceeds the estimation range, the DU 210 may identify that the HST condition is satisfied.

For example, the DU 210 may identify whether the HST condition is satisfied based on the setting information for the DU 210. For example, the setting information may include information for indicating that the DU 210 and the RU 220 associated with the DU 210 are base stations for supporting the terminal (or HST) moving at high speed. When the setting information is set, the DU 210 may identify that the HST condition is satisfied.

For example, the DU 210 may identify whether the HST condition is satisfied based on the frequency offset of the NTN. For example, the DU 210 may receive frequency offset information for the terminal transmitting the uplink data connected to the NTN and the DU 210 from a node for the NTN connected to the DU 210. The node for the NTN may include a satellite. In addition, for example, the DU 210 may receive frequency offset information from the terminal transmitting the uplink data connected to the DU 210 and the NTN. The frequency offset information may include a frequency offset for a signal between the terminal transmitting the uplink data and the NTN. According to an embodiment, the DU 210 may identify that the HST condition is satisfied based on the frequency offset information.

In operation 1000, when the HST condition is satisfied, the DU 210 may perform operation 1010. Alternatively, when the HST condition is not satisfied, the DU 210 may perform operation 1005. However, the embodiment of the present disclosure is not limited thereto. According to an embodiment, the DU 210 may perform operation 1010 without identifying whether the HST condition is satisfied in operation 1000.

According to an embodiment, in operation 1005, the DU 210 may perform decoding. For example, the DU 210 may perform a general decoding operation in response to identifying that the HST condition is not met in operation 1000. For example, the DU 210 may receive uplink data and a plurality of reference signals. The DU 210 may identify a frequency offset based on the plurality of reference signals that are received. The DU 210 may decode the uplink data based on the identified frequency offset. The decoding for the uplink data may succeed. The frequency offset may be a value in the estimation range.

According to an embodiment, in operation 1010, the DU 210 may obtain a plurality of reference signals in a time interval and uplink data. For example, the DU 210 may obtain a reception signal from the RU 220. The reception signal may indicate a signal received by the RU 220 from the terminal transmitting the uplink data. The reception signal may indicate a signal in a frequency domain where a CP is removed from a RF signal received by the RU 220 and fast Fourier transform (FFT) is performed. For example, the reception signal may include the plurality of reference signals and the uplink data. The reception signal may indicate a signal in the time interval. The time interval may include a transmission time interval (TTI) or a subframe. For example, the plurality of reference signals may include DMRSs.

According to an embodiment, in operation 1015, the DU 210 may identify a first frequency offset. For example, the DU 210 may identify the first frequency offset based on the plurality of reference signals. For example, the DU 210 may identify the first frequency offset based on a phase difference measured for the plurality of reference signals and a time difference between reception time of each of the plurality of reference signals. The first frequency offset may be referred to as a frequency offset for initial decoding.

According to an embodiment, in operation 1020, the DU 210 may perform the initial decoding based on the first frequency offset. For example, the DU 210 may perform the initial decoding on the uplink data based on the first frequency offset.

According to an embodiment, in operation 1025, the DU 210 may identify whether the initial decoding is successful. For example, the DU 210 may identify whether the initial decoding based on the first frequency offset is successful. For example, the DU 210 may identify whether the decoding is successful by detecting an error based on cyclic redundancy check (CRC) for the uplink data. For example, when a CRC result for the uplink data is a failure, the DU 210 may identify that the decoding of the uplink data fails. For example, when the CRC result for the uplink data is a pass, the DU 210 may identify that the decoding of the uplink data is successful. As described above, the DU 210 may identify whether the initial decoding based on the first frequency offset is successful using the CRC. When the initial decoding is successful in operation 1025, operation 1030 may be performed. In operation 1030, according to an embodiment, as the initial decoding is successful, the DU 210 may obtain decoded uplink data. Alternatively, when the initial decoding fails in operation 1025, operation 1035 may be performed.

In operation 1035, according to an embodiment, the DU 210 may identify a second frequency offset based on the first frequency offset and a reference value. For example, the DU 210 may identify the second frequency offset based on the first frequency offset and the reference value. The reference value may indicate a value scaled by an integer multiple of a size of the estimation range. For example, when the estimation range is in a range of about - 1000 Hz to about 1000 Hz, the size of the estimation range may be 2000 Hz. For example, the reference value may be defined as 2000Hz*m (the m is 1 or -1). The second frequency offset may indicate a frequency offset for the first additional decoding.

According to an embodiment, the reference value may be a positive number when the first frequency offset is a negative number. For example, the m may be 1. Conversely, the reference value may be a negative number when the first frequency offset is a positive number. For example, the m may be -1. Accordingly, the second frequency offset may be identified based on the reference value having a different value according to a sign of the first frequency offset.

Although not illustrated in FIG. 10, according to an embodiment, the DU 210 may store a first log-likelihood ratio (LLR) identified based on the first frequency offset when the initial decoding fails. For example, the DU 210 may store the first LLR in a buffer (or a soft buffer).

According to an embodiment, in operation 1040, the DU 210 may perform additional decoding based on the second frequency offset. For example, the DU 210 may perform the additional decoding on the uplink data based on the second frequency offset. The additional decoding may indicate decoding performed again after the initial decoding is performed on the uplink data.

According to an embodiment, in operation 1045, the DU 210 may identify whether the additional decoding is successful. For example, the DU 210 may identify whether the additional decoding based on the second frequency offset is successful. For example, the DU 210 may identify whether the decoding is successful by detecting an error based on cyclic redundancy check (CRC) for the uplink data. For example, when a CRC result for the uplink data is a failure, the DU 210 may identify that the decoding of the uplink data fails. For example, when the CRC result for the uplink data is a pass, the DU 210 may identify that the decoding of the uplink data is successful. As described above, the DU 210 may identify whether the additional decoding based on the second frequency offset is successful using the CRC. When the additional decoding is successful in operation 1045, operation 1050 may be performed. In operation 1050, according to an embodiment, as the initial decoding is successful, the DU 210 may obtain decoded uplink data. Alternatively, when the initial decoding fails in operation 1045, operation 1055 may be performed.

Although not illustrated in FIG. 10, according to an embodiment, in operation 1045, the DU 210 may store a second log-likelihood ratio (LLR) identified based on the second frequency offset when the additional decoding fails. For example, the DU 210 may store the second LLR in a buffer (or a soft buffer). In other words, the DU 210 may store two LLR values in two buffers when the decoding of two times is performed.

According to an embodiment, the DU 210 may select one of the first LLR and the second LLR and store it in the buffer. For example, an LLR in which a pSINR is maximum from among the two LLR values may be identified. For example, the pSINR may indicate a metric for indicating reception performance identified in a channel equalizer (e.g., the channel equalizer 860 of FIG. 8B). In addition, for example, the DU 210 may identify an LLR in which a LLR value is maximum from among the two LLR values. In addition, for example, the DU 210 may identify an LLR in which the two LLR values are summed. Thereafter, the DU 210 may store the identified LLR in the buffer.

In other words, DU 210 may store up to two LLR values based on implementation complexity and reception performance of the DU 210. For example, when only high reception performance is considered, the DU 210 may store and decode all two LLR values. However, the DU 210 needs to include two buffers to store the two LLR values. As the two buffers (i.e., buffer size) included in the DU 210 increase, the implementation complexity of the DU 210 may increase. The DU 210 may identify the number of LLR values to be stored based on a reception environment. For example, the reception environment may be identified based on at least one of a modulation and coding scheme (MCS), a pSINR, the number of allocated RBs, or the number of antennas.

In operation 1055, according to an embodiment, the DU 210 may transmit a signal for a retransmission request of the uplink data. For example, the DU 210 may transmit the signal for the retransmission request of the uplink data to the terminal via the RU 220 in response to the additional decoding performed on the uplink data being failed. Thereafter, according to an embodiment, the DU 210 may obtain uplink data retransmitted from the RU 220. The DU 210 may perform retransmission decoding on the retransmitted uplink data. For example, the retransmission decoding may indicate an initial decoding for the retransmitted uplink data. The retransmitted uplink data may be included in a signal in another time interval different from the time interval. For example, when the uplink data obtained in operation 1010 is included in a signal obtained in the time interval (e.g., the subframe or the TTI), the other time interval may indicate the next time interval that is continuous with the time interval. In addition, for example, the other time interval may indicate a time interval after a predetermined time elapses from the time interval.

Although not illustrated in FIG. 10, according to an embodiment, the DU 210 may perform the retransmission decoding based on an LLR value stored in at least one buffer. For example, the DU 210 may perform HARQ combining based on the LLR value for the retransmitted uplink data and one LLR value of the two stored LLR values. For example, the one LLR value may indicate an LLR identified based on the same frequency offset as the estimated frequency offset for decoding the retransmitted uplink data. In addition, for example, the DU 210 may perform the HARQ combining based on the LLR for the retransmitted uplink data and the stored one LLR value. The stored one LLR value may be identified based on a pSINR, an LLR size, or a summed LLR value. Based on the LLR combined according to the HARQ combining, the DU 210 may perform the retransmission decoding.

Referring to the above, a device and a method according to an embodiment of the present disclosure may accurately identify a frequency offset based on the plurality of reference signals regardless of the phase ambiguity. Accordingly, the device and the method according to an embodiment of the present disclosure may accurately decode uplink data by compensating for the identified frequency offset. In addition, the device and the method according to an embodiment of the present disclosure may transmit the signal for the retransmission request to the terminal when a maximum number of decoding (or the reference number) is exceeded. In this case, the device and the method according to an embodiment of the present disclosure may efficiently decode the retransmitted signal based on at least a portion of log-likelihood ratio (LLR) values corresponding to the maximum number of decoding.

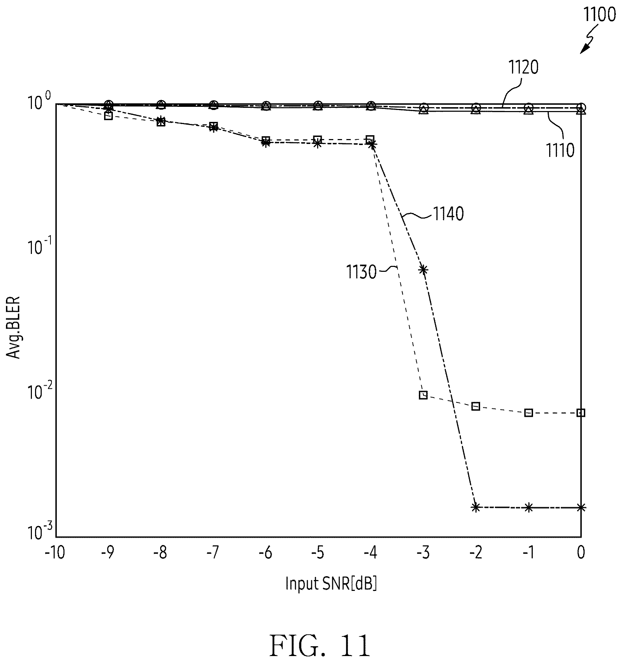

FIG. 11 illustrates an example of a graph indicating reception performance according to additional decoding based on a frequency offset.

A graph 1100 of FIG. 11 indicates reception performance according to whether additional decoding is performed for an HST environment having a maximum frequency offset. The graph 1100 may include a first line 1110 indicating a case where the additional decoding is not performed for the HST environment having the maximum frequency offset of a first value, and a second line 1120 indicating a case where the additional decoding is not performed for the HST environment having the maximum frequency offset of a second value greater than the first value. Conversely, the graph 1100 may include a third line 1130 indicating a case where the additional decoding is performed for the HST environment having the maximum frequency offset of the first value, and a fourth line 1140 indicating a case where the additional decoding is performed for the HST environment having the maximum frequency offset of the second value. A horizontal axis of the graph 1100 may indicate a signal to noise ratio (SNR) (unit: dB), and a vertical axis may indicate an average block error rate (BLER) value.

Referring to the graph 1100, a case where the additional decoding is performed based on a new frequency offset changed based on a previous frequency offset and a reference value, may have a lower block error rate than a case where it is not. For example, the third line 1130 may have a lower block error rate according to SNR than the first line 1110. In addition, the fourth line 1140 may have a lower block error rate according to SNR than the second line 1120. Specifically, referring to the first line 1110 and the second line 1120, a case where the additional decoding is not performed may have a block error rate having a value of about 1 regardless of SNR. In other words, a case where the additional decoding is not performed may be in a state that reception of a signal is substantially impossible. In contrast, in a case where the additional decoding is performed according to an embodiment of the present disclosure, a block error rate may be reduced as SNR increases. In other words, the reception performance of the signal may be improved as SNR increases, by performing the additional decoding considering phase ambiguity.

In addition, although not illustrated in FIG. 11, when the additional decoding on the data fails, a device and a method according to an embodiment of the present disclosure may efficiently perform decoding (or retransmission decoding) on data based on an LLR value stored whenever the additional decoding of the data is performed. At this time, the device and the method according to an embodiment of the present disclosure may efficiently decode the retransmitted data based on at least one LLR identified based on a reception environment (e.g., a modulation and coding scheme (MCS), a pSINR, the number of allocated RBs, or the number of antennas). Accordingly, the device and the method according to an embodiment of the present disclosure may improve the reception performance.

The effects that may be obtained from the present disclosure are not limited to those described above, and any other effects not mentioned herein will be clearly understood by those having ordinary knowledge in the art to which the present disclosure belongs, from the following description.

A base station in which a function is not split may identify a frequency offset based on a plurality of reference signals or a plurality of CPs of a received signal. The base station in which the function is not split may only perform decoding on uplink data by compensating for the identified frequency offset, and may not perform additional decoding. Unlike the base station in which the function is not split, a base station in which the function is split by a DU and an RU may be limited in identifying the frequency offset based on the plurality of reference signals or the plurality of CPs. In addition, a base station serving a terminal moving at high speed such as an HST environment may be limited in identifying the frequency offset based on the plurality of reference signals.

In an embodiment of the present disclosure, a DU 210 that is functionally spilt in the HST environment may effectively decode a signal (or data within the signal) in a frequency domain obtained from an RU 220. The DU 210 may identify a frequency offset based on a plurality of reference signals in the signal. The DU 210 may identify a new frequency offset when decoding of the data in the signal fails according to the identified frequency offset. The DU 210 may perform additional decoding on the data based on the new frequency offset. The signal may indicate a specific time interval (e.g., a subframe or a TTI). For example, a reference number for limiting the number of additional decoding may be identified based on at least one of a maximum Doppler frequency or a throughput.

In embodiments, a method performed by a digital unit (DU) may comprise obtaining uplink data and a plurality of reference signals in a time interval, from a radio unit (RU). The method may comprise, based on phase information of the plurality of reference signals, identifying a first frequency offset. The method may comprise, based on the first frequency offset, performing initial decoding for the uplink data. The method may comprise, in response to a failure of the initial decoding, based on the first frequency offset and a reference value, identifying a second frequency offset. The method may comprise, based on the second frequency offset, performing additional decoding for the uplink data. The reference value may be identified based on a time difference between the plurality of reference signals in the time interval.

According to an embodiment, the identifying the second frequency offset may comprise, when identifying the failure of the initial decoding, identifying a decoding number performed on the uplink data. The identifying the second frequency offset may comprise, based on the decoding number less than a reference number, identifying the second frequency offset.

According to an embodiment, the reference number may indicate a maximum number of decoding performable on the uplink data in the time interval. The reference number may be identified based on at least one of a maximum Doppler frequency, a center frequency of a reception signal including the uplink data and the plurality of reference signals, a maximum speed of a terminal associated with the reception signal, and a distance between the RU and a route along which the terminal moves.

According to an embodiment, a reception signal including the uplink data and the plurality of reference signals may include a signal FFT transformed by the RU. Each of the plurality of reference signals may include a demodulation reference signal (DMRS).

According to an embodiment, the first frequency offset may be identified based on a phase difference between the plurality of reference signals in the time interval, and the time difference. The second time frequency offset may be changed by the reference value with respect to the first frequency offset.

According to an embodiment, the method may comprise identifying whether a high speed train (HST) condition is satisfied, the HST condition being for determining whether a frequency offset in accordance with the time difference is included in an estimation range in accordance with a propagation condition associated with the RU. The method may comprise, when the HST condition is satisfied, performing the additional decoding and the initial decoding for the uplink data. The propagation condition may be included in a performance requirement for a base station including the DU.

According to an embodiment, the HST condition may be identified based on at least one of information indicating speed of a terminal that transmitted the uplink data, a frequency offset estimated from another channel different from a channel associated with the uplink data, or setting information for the DU. The another channel may include a physical random access channel (PRACH). The setting information may include information for indicating that the base station is a base station supporting the HST.

According to an embodiment, the method may comprise storing a first log-likelihood ratio (LLR) identified based on the first frequency offset. The method may comprise storing a second LLR identified based on the second frequency offset.

According to an embodiment, the method may comprise identifying a LLR from among of the first LLR and the second LLR. The LLR may be identified based on at least one of a post detection signal to interference plus noise ratio (pSINR), a size of a LLR, or a summed value of the first LLR and the second LLR.

According to an embodiment, the method may comprise, in response to a decoding number performed on the uplink data exceeding a reference number, transmitting a signal for a retransmission request of the uplink data, via the RU, to a terminal that transmitted the uplink data. The method may comprise, based on the identified LLR, performing a retransmission decoding for the retransmitted uplink data obtained from the RU.

In embodiments, an electronic device for a digital unit (DU) may comprise a transceiver. The electronic device may comprise a processor. The processor may be configured to obtain, via the transceiver, uplink data and a plurality of reference signals in a time interval, from a radio unit (RU). The processor may be configured to, based on phase information of the plurality of reference signals, identify a first frequency offset. The processor may be configured to, based on the first frequency offset, perform initial decoding for the uplink data. The processor may be configured to, in response to a failure of the initial decoding, based on the first frequency offset and a reference value, identify a second frequency offset. The processor may be configured to, based on the second frequency offset, perform additional decoding for the uplink data. The reference value may be identified based on a time difference between the plurality of reference signals in the time interval.

According to an embodiment, the processor may be configured to, when identifying the failure of the initial decoding, identify a decoding number performed on the uplink data. The processor may be configured to, based on the decoding number less than a reference number, identify the second frequency offset.

According to an embodiment, the reference number may indicate a maximum number of decoding performable on the uplink data in the time interval. The reference number may be identified based on at least one of a maximum Doppler frequency, a center frequency of a reception signal including the uplink data and the plurality of reference signals, a maximum speed of a terminal associated with the reception signal, and a distance between the RU and a route along which the terminal moves.

According to an embodiment, a reception signal including the uplink data and the plurality of reference signals may include a signal FFT transformed by the RU. Each of the plurality of reference signals may include a demodulation reference signal (DMRS).

According to an embodiment, the first frequency offset may be identified based on a phase difference between the plurality of reference signals in the time interval, and the time difference. The second time frequency offset may be changed by the reference value with respect to the first frequency offset.

According to an embodiment, the processor may be configured to identify whether a high speed train (HST) condition is satisfied, the HST condition being for determining whether a frequency offset in accordance with the time difference is included in an estimation range in accordance with a propagation condition associated with the RU. The processor may be configured to, when the HST condition is satisfied, perform the additional decoding and the initial decoding for the uplink data. The propagation condition may be included in a performance requirement for a base station including the DU.

According to an embodiment, the HST condition may be identified based on at least one of information indicating speed of a terminal that transmitted the uplink data, a frequency offset estimated from another channel different from a channel associated with the uplink data, or setting information for the DU. The another channel may include a physical random access channel (PRACH). The setting information may include information for indicating that the base station is a base station supporting the HST.

According to an embodiment, the processor may be configured to store a first log-likelihood ratio (LLR) identified based on the first frequency offset. The processor may be configured to store a second LLR identified based on the second frequency offset.

According to an embodiment, the processor may be configured to identify a LLR from among of the first LLR and the second LLR. The LLR may be identified based on at least one of a post detection signal to interference plus noise ratio (pSINR), a size of a LLR, or a summed value of the first LLR and the second LLR.

According to an embodiment, the processor may be configured to, in response to a decoding number performed on the uplink data exceeding a reference number, transmit a signal for a retransmission request of the uplink data, via the RU, to a terminal that transmitted the uplink data. The processor may be configured to, based on the identified LLR, perform a retransmission decoding for the retransmitted uplink data obtained from the RU.

As described above, a non-transitory computer readable storage medium may store one or more programs, the one or more programs comprising instructions to, when executed by a processor of an electronic device of a distributed unit (DU) comprising a transceiver, cause the electronic device to obtain, via the transceiver, uplink data and a plurality of reference signals in a time interval, from a radio unit (RU). The non-transitory computer readable storage medium may store one or more programs, the one or more programs comprising instructions to, when executed by the processor, cause, based on phase information of the plurality of reference signals, identify a first frequency offset. The non-transitory computer readable storage medium may store one or more programs, the one or more programs comprising instructions to, when executed by the processor, cause, based on the first frequency offset, perform initial decoding for the uplink data. The non-transitory computer readable storage medium may store one or more programs, the one or more programs comprising instructions to, when executed by the processor, cause, in response to a failure of the initial decoding, based on the first frequency offset and a reference value, identify a second frequency offset. The non-transitory computer readable storage medium may store one or more programs, the one or more programs comprising instructions to, when executed by the processor, cause, based on the second frequency offset, perform additional decoding for the uplink data. The reference value may be identified based on a time difference between the plurality of reference signals in the time interval.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1.    A method performed by a distributed unit (DU), the method comprising:

obtaining uplink data and a plurality of reference signals in a time interval, from a radio unit (RU);

based on phase information of the plurality of reference signals, identifying a first frequency offset;

based on the first frequency offset, performing initial decoding for the uplink data;

in response to a failure of the initial decoding, based on the first frequency offset and a reference value, identifying a second frequency offset; and

based on the second frequency offset, performing additional decoding for the uplink data, and

wherein the reference value is identified based on a time difference between the plurality of reference signals in the time interval.

2. The method of claim 1,
wherein the identifying the second frequency offset comprises:

when identifying the failure of the initial decoding, identifying a decoding number performed on the uplink data; and

based on the decoding number less than a reference number, identifying the second frequency offset.

3. The method of claim 2,

wherein the reference number indicates a maximum number of decoding performable on the uplink data in the time interval, and

wherein the reference number is identified based on at least one of a maximum Doppler frequency, a center frequency of a reception signal including the uplink data and the plurality of reference signals, a maximum speed of a terminal associated with the reception signal, and a distance between the RU and a route along which the terminal moves.

4. The method of claim 1,

wherein a reception signal including the uplink data and the plurality of reference signals includes a signal FFT transformed by the RU, and

wherein each of the plurality of reference signals includes a demodulation reference signal (DMRS).

5. The method of claim 1,

wherein the first frequency offset is identified based on a phase difference between the plurality of reference signals in the time interval, and the time difference, and

wherein the second time frequency offset is changed by the reference value with respect to the first frequency offset.

6. The method of claim 1,
wherein the method further comprises:

identifying whether a high speed train (HST) condition is satisfied, the HST condition for determining whether a frequency offset in accordance with the time difference is included in an estimation range in accordance with a propagation condition associated with the RU; and

when the HST condition is satisfied, performing the additional decoding and the initial decoding for the uplink data, and

wherein the propagation condition is included in a performance requirement for a base station including the DU.

7. The method of claim 6,

wherein the HST condition is identified based on at least one of information indicating speed of a terminal that transmitted the uplink data, a frequency offset estimated from another channel different from a channel associated with the uplink data, or setting information for the DU,

wherein the another channel includes a physical random access channel (PRACH), and

wherein the setting information includes information for indicating that the base station is a base station supporting the HST.

8. The method of claim 1,

wherein the method comprises:

storing a first log-likelihood ratio (LLR) identified based on the first frequency offset; and
storing a second LLR identified based on the second frequency offset.

9. The method of claim 8,
wherein the method comprises:

identifying a LLR from among of the first LLR and the second LLR, and
wherein the LLR is identified based on at least one of a post detection signal to interference plus noise ratio (pSINR), a size of a LLR, or a summed value of the first LLR and the second LLR.

10. The method of claim 9,
wherein the method comprises:

in response to a decoding number performed on the uplink data exceeding a reference number, transmitting a signal for a retransmission request of the uplink data, via the RU, to a terminal that transmitted the uplink data; and based on the identified LLR, performing a retransmission decoding for the retransmitted uplink data obtained from the RU.

11. An electronic device of a distributed unit (DU) comprising:

memory storing instructions;
a transceiver; and
a processor,
wherein the instructions, when executed by the processor, cause the electronic device to:

obtain, via the transceiver, uplink data and a plurality of reference signals in a time interval, from a radio unit (RU);
based on phase information of the plurality of reference signals, identify a first frequency offset;
based on the first frequency offset, perform initial decoding for the uplink data;
in response to a failure of the initial decoding, based on the first frequency offset and a reference value, identify a second frequency offset; and
based on the second frequency offset, perform additional decoding for the uplink data, and
wherein the reference value is identified based on a time difference between the plurality of reference signals in the time interval.

12. The electronic device of claim 11, wherein the instructions, when executed by the processor, cause the electronic device to:

when identifying the failure of the initial decoding, identify a decoding number performed on the uplink data; and
based on the decoding number less than a reference number, identify the second frequency offset.

13. The electronic device of claim 12,

wherein the reference number indicates a maximum number of decoding performable on the uplink data in the time interval, and
wherein the reference number is identified based on at least one of a maximum Doppler frequency, a center frequency of a reception signal including the uplink data and the plurality of reference signals, a maximum speed of a terminal associated with the reception signal, and a distance between the RU and a route along which the terminal moves.

14. The electronic device of claim 11,

wherein a reception signal including the uplink data and the plurality of reference signals includes a signal FFT transformed by the RU, and
wherein each of the plurality of reference signals includes a demodulation reference signal (DMRS).

15. A non-transitory computer readable storage medium storing one or more programs, the one or more programs comprising instructions to, when executed by a processor of an electronic device of a distributed unit (DU) comprising a transceiver, cause to:

obtain, via the transceiver, uplink data and a plurality of reference signals in a time interval, from a radio unit (RU);
based on phase information of the plurality of reference signals, identify a first frequency offset;
based on the first frequency offset, perform initial decoding for the uplink data;
in response to a failure of the initial decoding, based on the first frequency offset and a reference value, identify a second frequency offset; and
based on the second frequency offset, perform additional decoding for the uplink data, and
wherein the reference value is identified based on a time difference between the plurality of reference signals in the time interval.

FIG. 1

110

210

215

220

DU

RU

FIG. 2A

FIG. 2B

210

DU

| 310 | 320 | 330 |
| TRANSCEIVER | MEMORY | PROCESSOR |

FIG. 3A

FIG. 3B

FIG. 4

RADIO FRAME (514)

SUBFRAME
(506)

N<sub>BW</sub> SUBCARRIERS (504)

$N_{SC}^{RB}$ CONSECUTIVE SUBCARRIERS (510)

RESOURCE ELEMENT (512)

RESOURCE BLOCK (508)

N<sub>symb</sub> OFDM SYMBOLS (502)

FIG. 5

FIG. 6A

650 651 652 653 654 655 656 657 658 659 660 661 662 663

| Sym 0 | Sym 1 | Sym 2 | Sym 3 | Sym 4 | Sym 5 | Sym 6 | Sym 7 | Sym 8 | Sym 9 | Sym 10 | Sym 11 | Sym 12 | Sym 13 |

## FIG. 6B

FIG. 7A

FIG. 7B

FIG. 7C

OBTAIN PLURALITY OF REFERENCE SIGNALS
IN TIME INTERVAL AND UPLINK DATA — 800

IDENTIFY FIRST FREQUENCY OFFSET
BASED ON PHASE INFORMATION OF PLURALITY
OF REFERENCE SIGNALS — 805

PERFORM INITIAL DECODING FOR UPLINK DATA
BASED ON FIRST FREQUENCY OFFSET — 810

IDENTIFY SECOND FREQUENCY OFFSET BASED
ON FIRST FREQUENCY OFFSET AND REFERENCE VALUE
IN RESPONSE TO FAILURE OF INITIAL DECODING — 815

PERFORM ADDITIONAL DECODING FOR UPLINK
DATA BASED ON SECOND FREQUENCY OFFSET — 820

FIG. 8A

220

210

850

855

860

865

870

| CP REMOVAL UNIT/FFT TRANS-FORM UNIT | | CHANNEL ESTIMA-TION UNIT/CHANNEL EQUALIZER | | LLR GENERATOR | | DECODER |

FIG. 8B

FIG. 9

FIG. 10

FIG. 11

## INTERNATIONAL SEARCH REPORT

| International application No. |
|---|
| **PCT/KR2023/019043** |

| A. | CLASSIFICATION OF SUBJECT MATTER |
|---|---|

**H04L 27/26**(2006.01)i; **H04L 1/18**(2006.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04L 27/26(2006.01); H04W 72/04(2009.01); H04W 76/40(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 추가 디코딩(additional decoding), 제1-제2 주파수 오프셋(first and second frequency offsets), 기준 값(reference value), 시간 구간(time interval), 기준 신호들(reference signals), 시간 차이(time difference), DU(distributed unit), RU(radio unit)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 최성우 등. 고속 이동체를 위한 상향링크 주파수 옵셋 보상 방법. 한국통신학회논문지. September 2015, vol. 40, no. 9, pp. 1699-1709 (CHOI, Sung-Woo et al. Uplink Frequency Offset Compensation Scheme for High-Speed Moving Terminals. The Journal of Korean Institute of Communications and Information Sciences.) <br> See pages 1703-1706; and figures 1 and 5. | 1-15 |
| A | MODERATOR (CMCC). Email discussion summary for RAN4#94e Bis_#222_NR_HST_Demod_UE. R4-2005452, 3GPP TSG-RAN WG4 Meeting #94-e-Bis, Electronic Meeting. 24 April 2020. <br> See pages 7-26. | 1-15 |
| A | JP 2015-192421 A (FUJITSU LTD.) 02 November 2015 (2015-11-02) <br> See paragraphs [0091]-[0144]; and figures 7-8. | 1-15 |
| A | KR 10-2016-0091260 A (ELECTRONICS AND TELECOMMUNICATIONS RESEARCH INSTITUTE) 02 August 2016 (2016-08-02) <br> See paragraphs [0013]-[0039]; and figures 1-4. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2024** | **20 February 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/019043**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2018-0061239 A (SONY MOBILE COMMUNICATIONS INC. et al.) 07 June 2018 (2018-06-07) See paragraphs [0045]-[0052]; and figure 4. | 1-15 |

Form PCT/ISA/210 (second sheet) (July 2022)

48

**INTERNATIONAL SEARCH REPORT**
Information on patent family members

International application No.

**PCT/KR2023/019043**

| Patent document cited in search report | | | Publication date (day/month/year) | Patent family member(s) | | | Publication date (day/month/year) |
|---|---|---|---|---|---|---|---|
| JP | 2015-192421 | A | 02 November 2015 | JP | 6323119 | B2 | 16 May 2018 |
| | | | | US | 2015-0282140 | A1 | 01 October 2015 |
| | | | | US | 9622099 | B2 | 11 April 2017 |
| KR | 10-2016-0091260 | A | 02 August 2016 | KR | 10-2013682 | B1 | 23 August 2019 |
| KR | 10-2018-0061239 | A | 07 June 2018 | CN | 108353049 | A | 31 July 2018 |
| | | | | CN | 108353049 | B | 01 July 2022 |
| | | | | EP | 3353970 | A1 | 01 August 2018 |
| | | | | EP | 3353970 | B1 | 21 July 2021 |
| | | | | JP | 2018-534825 | A | 22 November 2018 |
| | | | | JP | 6412295 | B1 | 24 October 2018 |
| | | | | KR | 10-2304177 | B1 | 24 September 2021 |
| | | | | US | 10009797 | B2 | 26 June 2018 |
| | | | | US | 2017-0094562 | A1 | 30 March 2017 |
| | | | | WO | 2017-050397 | A1 | 30 March 2017 |

Form PCT/ISA/210 (patent family annex) (July 2022)